# NEW EUROPEAN PATENT SPECIFICATION

(11) **EP 0 444 902 B2**
(45) Date of publication and mention of the opposition decision: **05.06.2002**
(45) Mention of the grant of the patent: 19.07.1995
(21) Application number: 91301594.7
(22) Date of filing: 27.02.1991
(51) Int. Cl.: B24B 9/14, B24B 13/06, B24B 49/02

(54) **Lens edging system**
Bearbeitungssystem für Linsenränder
Système d'usinage des bords de lentille

(30) Priority: 27.02.1990 US 485426
(43) Date of publication of application: 04.09.1991
(73) Proprietor: Luxottica Leasing S.p.A., 32021 Agordo (Belluno) (IT)
(72) Inventor: Byron, David L., Honeoye Falls, New York 14472 (US)
(74) Representative: Allam, Peter Clerk

(56) References cited:
- EP-A- 0 092 364
- EP-A- 0 131 743
- EP-A- 0 235 021
- EP-A- 0 236 182
- EP-A- 0 281 754
- GB-A- 2 140 719
- GB-A- 2 170 130
- US-A- 4 233 784
- US-A- 4 656 590
- US-A- 4 870 784

## Description

The invention lies in the field of lens edging machines for shaping lenses from lens blanks, and relates to an apparatus and a method for such purposes.

Lens edging machines are well-known in the art, one type being described, for example, in U.S. Patent No. 4,870,784 to Ramos et al. Typically, a lens is formed from a blank having a certain curvature in accordance with the desired optical focusing power. The curvature of an ophthalmic lens provides a corrective focusing power. The lens curvature for dark glasses or sun glasses typically provides no corrective focusing power. Having formed the lens blank with the desired curvature, the lens must be "cut" out of the blank in a shape which fits into the frame of the glasses. This is accomplished by "edging", or grinding the edges of the lens with an edging tool such as a grinding wheel until the desired lens shape is reached. If the lens is ophthalmic, the edging process may be performed by a lens edging machine of the type described in the above-referenced patent to Ramos et al. which uses a groove in the grinding wheel to bevel the lens edge. Another type of lens edging machine typically employed to make non-ophthalmic lenses uses an apex in its grinding wheel to bevel the lens edge. The bevel on the lens edge enables the lens to fit tightly into the frames of the eye glasses or sun glasses. Both types of lens edging machines rotate the lens blank with respect to the grinding wheel. Simultaneously, as the lens blank is rotated, the machine changes the displacement between the center of the lens blank and the wheel in accordance with the shape of the lens to be formed from the lens blank. In both types of lens edging machines discussed above, the displacement is changed by means of a cam having the desired lens shape which rotates with the lens blank against a stationary surface, as is well-known in the art. One problem with this feature is that the machine operation must be halted and the cam changed each time a different lens shape is to be made. After the lens has been formed from the lens blank, it is beveled, as mentioned above. The lens edge is then smoothed or polished to complete the process.

Current methods of lens edging are plagued by inconsistent quality manifested as out-of-tolerance conditions and non-uniformity between lenses. There are several causes. First, the grinding wheel, which typically is a diamond-like material or any material suitable for grinding the lens, continually wears and becomes gradually smaller during use, resulting in increasing lens size. Secondly, the cam and the surface against which it must move and rub continually wear, resulting in greater slipping and vibration which distorts the lens shape determined by the motion of the cam. The present method is also plagued by high maintenance costs and down-time, due to the fact that the grinding wheel wears out in a non-uniform manner, and must be dressed periodically. Also, as mentioned previously, the wheel becomes smaller with use, and must therefore be periodically replaced before the lens size increases beyond a tolerable limit. Each time the grinding wheel is either dressed or replaced, the edging machine is idle and non-productive.

The inability of such lens grinding machines to consistently produce lenses of the same dimensions arises from the fact that each lens is formed in the same machine at different times in the life of the grinding wheel, the cam and other wearing surfaces of the machine. Alternatively, the same components of different edging machines are at different points of wear so that lenses made on different machines are necessarily of slightly different dimensions. Such inconsistencies create difficulties when attempting to mount lenses into frames.

Another problem is that the rate at which the lens edge is ground must be slow enough to avoid damaging the glass lens material. If in an attempt to boost productivity the grinding wheel speed and/or the lens rotation speed is increased to the point at which sparking is observed during the edge grinding process, the glass material is damaged and rendered useless for high-quality eye-wear. Even if sparking or combustion of small glass particles is not observed, the lens surface may be too rough to be acceptable as a result of grinding the edge too fast. For these reasons, the rate at which the lens is ground is necessarily slow in order to avoid any risk of damaging the glass lens material. The disadvantage is that the slow production rate drives up the cost of producing lenses.

Computers have been employed to assist the lens edging process, as disclosed in the above-referenced patent to Ramos et al. Specifically, a computer is used to position the lens edge directly over the beveling groove in the Ramos et al. grinding wheel in accordance with the lens size, different sized lenses requiring different positions relative to the groove. Also, the computer in the Ramos et al. patent controls the sequencing of operations.

US-A-4 233 784 relates to an apparatus/a method according to the preamble of claim 1/claim 12.

Patent specification EP-A-0 092 364 discloses a method and apparatus which avoids the need to use a cam follower in edging a lens blank. This specification discloses a method and apparatus in which digital data pertaining to a lens shape is obtained from a lens template or from a frame in which the lens is to be mounted. From this data what are called edge-driver files are produced and stored in a memory associated with a computer. The edge-driver file corresponding to a desired lens shape is used to control the lens edging procedure by which the lens blank is ground to shape. Specifically the file holds data relating to the rotational angle of the lens blank and the radial positioning of the blank at each angular position.

There will be described below how the present invention can be implemented to provide measures that are intended to reduce the wear of an edging tool by distributing it across an axial length of the tool and to correct for errors in the size of the lens that build up due to wear of the edging tool.

More particularly, there will be described the concept of establishing a lens trajectory for the lens blank or workpiece that is to be shaped which incorporates data relating to a succession of corresponding lens rotational angles and lens radii and a succession of axial positions. The lens trajectory can also incorporate parameters providing for the bevelling of the lens edge on an apex portion of the edging tool.

There will be described below a pre-programmable lens edging apparatus embodying the invention which grinds and bevels the lens edge under the control of a microprocessor responding to a lens edge shape programmed into memory. The system holds the lens blank by a robot-like arm controlled by the microprocessor. The rotation of the lens by the arm as well as the motion of the arm with respect to the grinding wheel determines the lens shape and size in accordance with the lens edge shape programmed into memory. The lens edge shape and size are easily changed by simply directing the microprocessor to a different lens edge shape in the memory, thus saving the time required to replace the cam in the prior lens edging machines.

The described apparatus includes a sensor for measuring the lens size in a self-corrective feedback loop through the microprocessor which automatically compensates for wear shrinkage of the grinding wheel. The self-corrective feedback loop permits the machine to use the same grinding wheel and wear it down almost to a nub without suffering appreciable change in lens size, depending upon the frequency at which the lens size is monitored.

The practice of the invention also includes a method for distributing wear across at least near the entire surface of the grinding wheel, whereby the lens blank continually moves axially across the surface of the grinding wheel during substantially the entire lens edge grinding operation so as to uniformly distribute wear across the surface of the grinding wheel. This uniform wear process avoids the formation of voids or grooves in the grinding wheel, which in prior machines have required elimination by dressing the wheel frequently. By virtue of the self-correcting feedback loop the wheel does not need to be changed until it has been completely worn away, and by virtue of the uniform wear process need not be dressed, thus eliminating the frequent interruptions required by frequent attention to maintenance of the grinding wheel in prior lens edging machines.

We shall also describe how after the lens edge shape has been formed by grinding on a cylindrical portion of the grinding wheel, the lens edge is beveled on a convex apex portion of the grinding wheel by successively rotating opposite sides of the lens edge against opposite sides of the grinding wheel apex. The rotational motion of the lens as well as the motion of the robot-like arm holding the lens is governed by the microprocessor in accordance with a trajectory stored in memory computed in accordance with the shape and curvature of the lens and the shape of the grinding wheel apex. As used in this specification, the term "trajectory" refers to the simultaneous paths of (a) the rotation of the lens about a fixed center point on the lens, (b) the radial motion of the lens perpendicular to the rotational axis of the grinding wheel and (c) the transversal motion of the lens parallel to the rotational axis of the grinding wheel. Different beveling geometries may be programmed into memory for the same type of lens and the same beveling geometry may be programmed into memory for many different lenses.

More particularly in a preferred method, the motion of the lens or lens blank is divided into N points in time covering the entire lens edge grinding and beveling process, where N is on the order of 64,000, for example. The rate at which the lens is rotated against the grinding wheel, the rotational speed of the wheel, the velocity at which the lens is translated axially across the surface of the grinding wheel and the force with which the lens is held against the grinding wheel are each defined in memory for each one of the N points. The microprocessor requires a complete set of such definitions stored in memory for each different lens shape to be made.

Still more preferably, the set of definitions of the lens rotational rate, the grinding wheel speed, the axial lens feed velocity and the grinding pressure are optimized at each one of the N points to maximize lens grinding speed (productivity) to a rate slightly below that which would overheat the glass lens material. The optimum value for each parameter (rotational rate, speed, feed velocity and grinding pressure) is determined at each one of the N points in accordance with a trial and error method of the invention in which various combinations of all the parameters are tried at each one of the N points and the results stored in memory. In one embodiment of this method, the microprocessor systematically varies all the parameters (rate, speed, velocity and pressure) while monitoring a spark sensor positioned to detect overheating of the glass lens material. For each one of the N points in the motion of the lens, the microprocessor notes the value of all the parameters at the highest grinding wheel speed at which no overheating was detected by the sensor. The microprocessor stores the noted values in memory. After this process has been carried out at all N points, the trial and error process is complete, and the memory contains a set of optimum grinding parameters for the entire grinding process of a given lens shape. This set of parameters is then permanently stored (on hard disk or in read-only memory, for example) and reused over and over during the manufacture of lenses of the same design. The learning process merely requires a memory of sufficient capacity.

The optimum speed at which the glass is removed from the lens is determined at least in part by the ability of the removed glass particles to take away heat from the workpiece or lens blank. In order to maintain a certain rate of heat removal, rate of glass removal should be prevented from decreasing as the size of the workpiece (the lens blank) decreases during the grinding process. Thus, the trial and error learning method in many cases may progressively increase the grinding wheel speed as the size of the lens blank decreases during the grinding process. In this sense, the set of optimum grinding parameters generated by the trial and error learning method will implement well-known principles of metal lathe techniques sometimes referred to as "constant surfacing".

In a first aspect of the invention there is provided a lens edging apparatus comprising the features of claim 1.

Preferred embodiments of this apparatus are defined in dependent claims 2 to 11.

In a second aspect of the invention there is provided a method of operating a lens edging apparatus, which method is defined in claim 12.

Dependent claims 13 and 14 relate to preferred embodiments of this method.

Claim 15 defines an apparatus for performing a method according to the second aspect of the invention.

### BRIEF DESCRIPTION OF THE DRAWINGS

Preferred embodiments of the invention are described below in detail by reference to the accompanying drawings, of which:
Fig.'s 1a and 1b illustrate apparatus of the prior art for grinding lens edges;
Fig.'s 2a and 2b illustrate, respectively, a lens blank and a lens produced from the blank by the apparatus of Fig. 1a;
Fig. 3 is a simplified pictorial diagram illustrating key components of the lens edging system of the invention;
Fig. 4 is a diagram illustrating the lens servo arm employed in the system of Fig. 3;
Fig.'s 5a and 5b illustrate a complete version of the system of Fig. 3;
Fig. 6 is a polar plot of an exemplary lens ege contour;
Fig. 7 depicts a plot of the lens trajectory during edging on a cylindrical portion of the grinding wheel (solid line) and on an apex portion of the grinding wheel (dotted line) for a lens with no curvature and a constant lens rotational rate;
Fig. 8 depicts a plot of the lens trajectory corresponding to Fig. 7 for a lens having a spherical curvature;
Fig.'s 9a, 9b and 9c are exemplary lens trajectory plots depicting the vertical position, horizontal position and horizontal (feed) velocity, respectively, of the lens motion relative to the grinding wheel as a function of time;
Fig. 10 depicts a table stored in a memory of the system of Fig. 3 of all the parameters of the grinding process for each incremental point in time during the lens edging process; and
Fig. 11 is a flow diagram illustrating the programmed learning process for learning the optimum values of the parameters to be written into the table of Fig. 10.

### MODES FOR CARRYING OUT THE INVENTION

### Conventional Lens Edging Techniques:

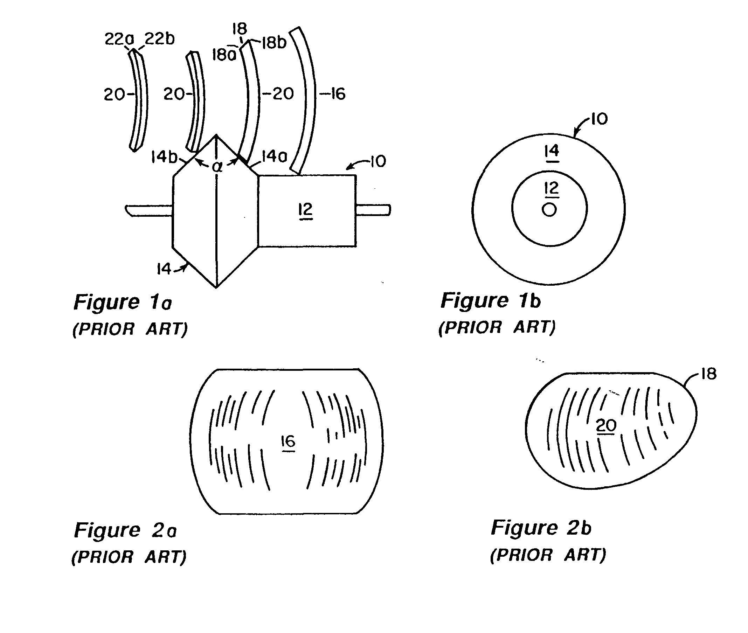

Fig. 1a illustrates the basic steps in a lens edging process of the prior art. A grinding wheel 10 includes a cylinder portion 12 and an apex portion 14, both portions having concentric circular shapes as shown in Fig. 1b. The grinding wheel 10 is made of a diamond-like material. A lens blank 18 shown in Fig. 2a is ground along its edge 18 on the cylindrical portion 12 of Fig. 1a to form the lens 20 of Fig. 2b. The "left" corner 18a of the lens edge 18 is then ground on the "right" side 14a of the apex portion 14 and the "right" corner 18b of the lens edge 18 is ground on the "left" side 14b of the apex portion 14 to form beveled lens edge surfaces 22a and 22b, respectively. The geometry of the beveled surfaces 22a and 22b conforms to the design of the eye wear frame in which the lens 20 is to be mounted.

The motion of the lens during the grinding process is governed by the motion of a rotating cam (not shown) against a stationary surface, the cam having the same shape as that of the lens 20 illustrated in Fig. 2b. The method and apparatus of the prior art suffered from a number of disadvantages as discussed previously herein, arising from the wearing away of the surface of the grinding wheel 10, the wearing away of the surface of the cam and the formation of voids in the surface of the grinding wheel 10 due to non-uniform wear, as well as the necessity of changing the cam each time a different lens design was to be followed.

### The System of the Invention:

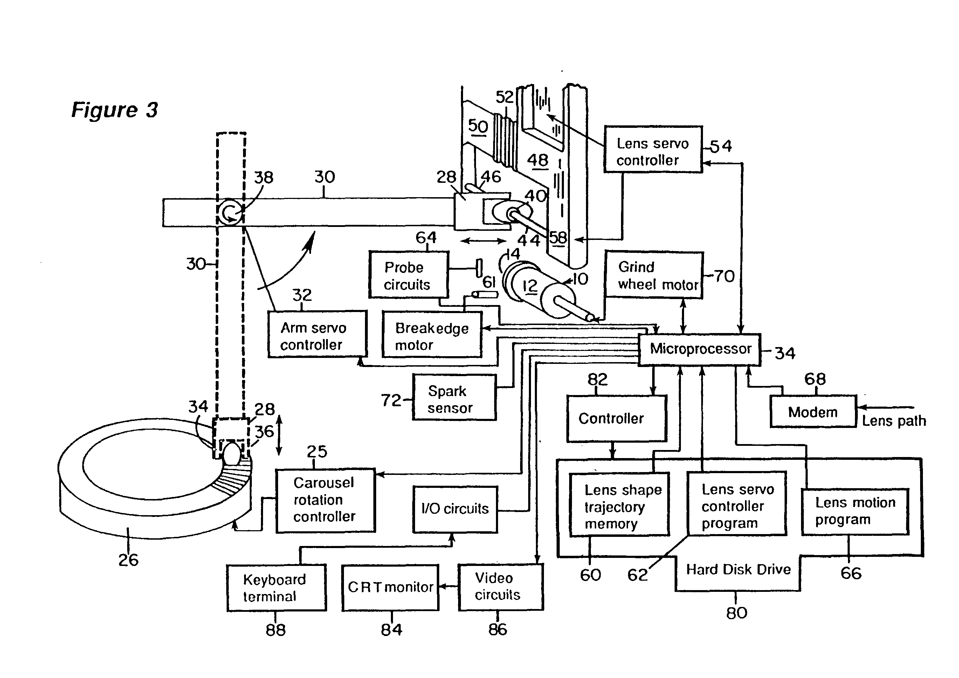

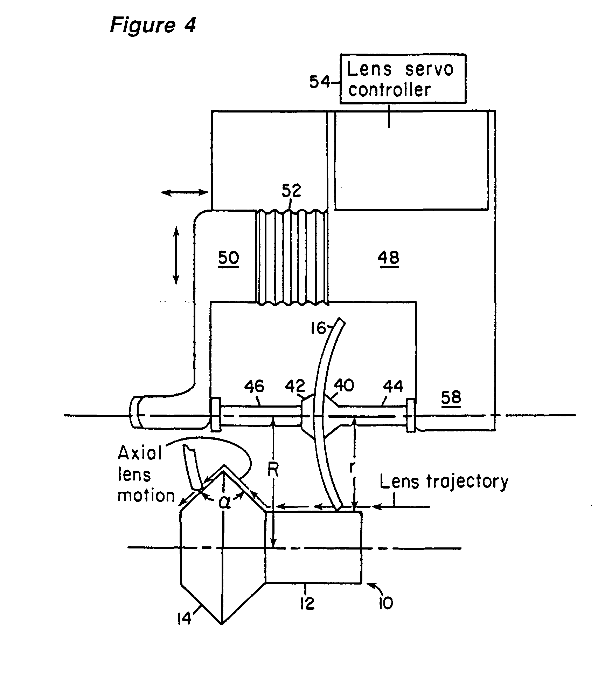

All of these problems are solved in the lens edging system of the invention illustrated in Fig. 3. Each lens blank is withdrawn from a carousel 26 containing many lens blanks by a servo-controlled hand 28 mounted on a servo-controlled arm 30 governed by an arm servo controller 32 controlled by a central microprocessor 34. The position of the rotating carousel 26 is controlled by the microprocessor 34 through a carousel rotation controller 25 using well-known digital servo control techniques. In one implementation, the hand 28 moves axially along the arm 30 so that it extends itself toward the carousel 26 (dashed-line position) and grabs the lens blank 16 by pressing opposing edges thereof between two fingers 34, 36. The finger 36 is movable toward the other finger 34 to clasp the lens 16 firmly. The hand 28 then withdraws up the arm 30 and the arm 30 rotates about a pivot 38 to the solid line position. The hand 28 then moves axially along the arm 30 to insert the lens between opposing driver cups 40, 42 (Fig. 4) mounted on rotating spindles 44, 46. The spindles 44, 46 are supported on opposing spars 48, 50 of a lens servo arm 52 governed by a lens servo controller 54 under control of the microprocessor 34. As soon as the lens blank 16 is positioned between the pair of driver cups 40 and 42, the lens servo controller 54 causes the opposing spars 48, 50 to travel toward one another to grasp the lens blank 16 between the two driver cups 40, 42, as shown in Fig. 4. The microprocessor 34 then commands the lens servo controller 54 to move the arm 52 toward the grinding wheel 10 and hold the edge of the lens blank 16 against the wheel 10 and to rotate the spindles 44, 46 by means of a spindle motor 58 controlled by the lens servo controller 54.

The lens servo controller 54 varies the distance R of the center of the lens blank 16 (i.e., the axis of the spindles 44, 46) from the axis of the grinding wheel 10 as the lens blank rotates about the axis of the spindles 44, 46 so as to achieve the desired lens edge contour or shape. The lens servo controller 54 does this under control of the microprocessor 34 in accordance with a lens trajectory table stored in a lens shape trajectory memory 60. The lens trajectory table defines the distance r between the lens blank center and the grinding wheel 10 for each incremental rotational position Θ of the lens blank 16 about the axis of the spindles 44, 46 in accordance with the shape of the lens to be formed. Using well-known computer numerical machine control techniques of the prior art, the microprocessor 34 computes from the data stored in the lens shape trajectory memory 60 servo control signals using a servo controller program stored in a lens servo controller program memory 62. Generating the servo controller program is conventional in the art. The microprocessor 34 transmits the control signals thus generated in a succession which determines the sequence of the lens edge grinding steps.

Upon completion of the lens edging process, the lens edge is smoothed by the lens servo arm holding the corner 18a of the lens edge 18 against a rotating break-edge wheel 61.

The lens shape trajectory memory 60 may contain a large selection of different trajectory tables for manufacturing different lenses with different edge contours. Thus, the lens design may be quickly changed by directing the microprocessor 34 to a different table in the memory 60, a significant advantage.

### Self-Correcting Lens Dimension Feedback Control Loop:

As the grinding wheel 10 wears, it gets smaller, which increases the size of the lens in prior art techniques. The solution has been to frequently replace the grinding wheel 10 to minimize the growth in lens size as successive lenses are edged. This problem is now solved by using a size probe 64 connected through probe output circuits 66 to the microprocessor 34. The probe 64 is of the type manufactured by, for example, Renishaw Metrology Ltd., Gloucester, England. After the lens 20 has been formed by the system of Fig. 3, the lens servo arm 52 rotates the lens to a predetermined rotational position Θ and then moves the lens 20 edgewise toward the probe 64. The microprocessor 34 notes the position of the lens servo arm 52 at the point when the probe 64 first senses contact with the lens edge. This position indicates the radius r of the lens 20 at the rotational position Θ. The correct position may be readily determined from the desired lens edge contour. The microprocessor 34 compares the actual position and the correct position to compute an error. The microprocessor 34 compensates for this error by adjusting (decreasing) the distance between the next lens to be edged and the axis of the grinding wheel 10. Essentially, the microprocessor 34 adjusts the trajectory of the lens for the entire edging process to bring it closer to the rotational axis of the wheel 10 by an amount equal to the computed position error. This feature will be described below herein. Thus, the grinding wheel 10 may be allowed to wear down almost to its axle during the edging of successive lenses without creating errors in lens dimensions as long as the lens radius is monitored sufficiently frequently.

### Uniform Distribution of Wheel Wear:

Another problem of the prior art was that most of the lens edging took place on the cylinder portion 12 of the grinding wheel 10, with non-uniform wear creating voids or unwanted grooves in the grinding wheel. Thus, the wheel 10 had to be dressed frequently. We have devised a method for solving this problem in which the microprocessor 34 causes the lens servo arm 52 to continuously translate the lens blank 16 axially across the surface of the grinding wheel 10 during the entire lens edging operation while controlling the axial feed velocity of the lens from one end of the wheel 10 to the other end to uniformly distribute the wear across the entire surface of the wheel 10. This axial motion continues during the beveling operation when the lens contacts the apex portion 14 of the grinding wheel 10.

To achieve the desired uniform wear distribution, the lens servo arm 52 must perform a complex task by rotating the lens blank 16 while varying its displacement from the grinding wheel 10 in accordance with the desired lens shape while at the same time translating the lens axially across the surface of the wheel 10 in a continuous motion. This task is even more complex as the lens is beveled on the apex portion 14 of the wheel 10, as will be discussed below herein.

### Dual Lens Dual Load/Unload Magazine Method:

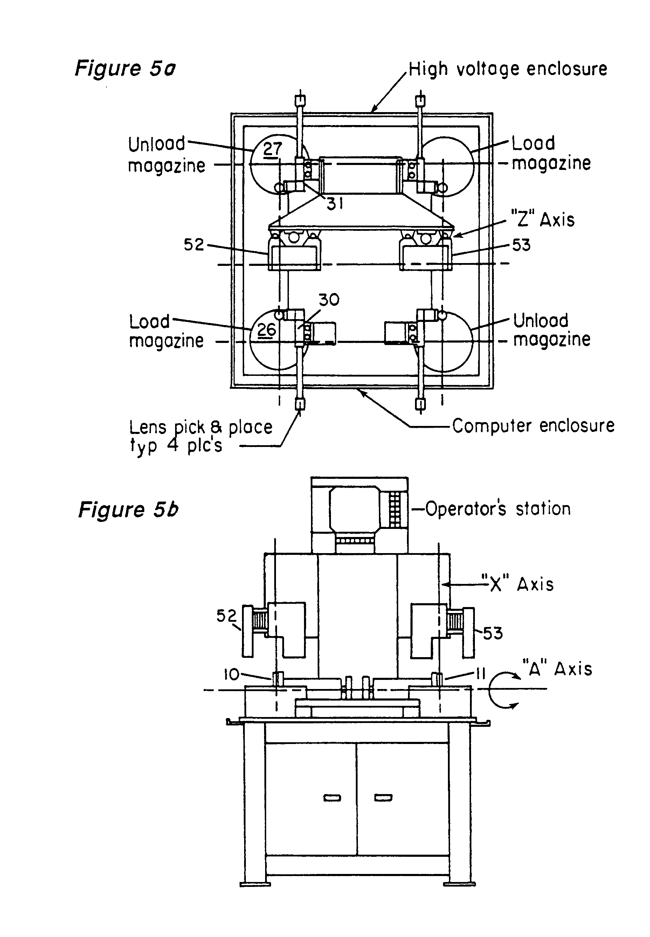

Referring to Fig. 5, the preferred practice of the invention requires the same microprocessor 34 to control the simultaneous grinding of a pair of lenses by a pair of grinding wheels 10, 11 using a pair of lens servo arms 52, 53. For each one of the two grinding wheels 10, 11, there is an unload arm 30 (as in Fig. 3) and a load arm 31, an unload carousel 26 (as in Fig. 3) and a load carousel 27. With respect to the one lens servo arm 52, the unload arm 30 picks a lens blank out of the unload carousel 26 and gives it to the lens servo arm 52 for edging. At the conclusion of the edging process, the load arm 31 takes the lens from the lens servo arm 52 and places it in the load carousel 27. Each carousel is rotated to position the present the next slot in the carousel to the corresponding load or unload arm for the next cycle. Preferably, the microprocessor 34 is programmed to operate the carousels and the load and unload arms so that as one finished lens is being placed into the unload carousel, the next lens blank is being taken from the load carousel, so that there is no wasted motion. One advantage is that the same cycle may be used to simultaneously produce a pair of lenses to be inserted into the same eye wear frame, so as to enhance the probability that each pair of lenses is closely matched.

### Programmable Lens Edging and Beveling Method:

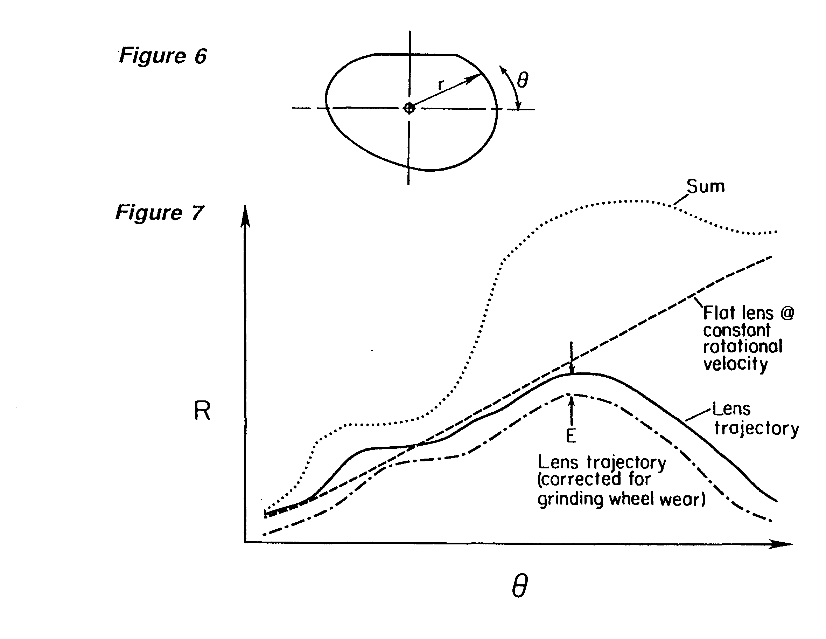

Fig. 6 illustrates an exemplary lens edge shape in polar coordinates. The radius r in Fig. 6 corresponds to the distance r in Fig. 4 between the center of the lens 20 (the axis of the spindles 44, 46) and the surface of the grinding wheel 10. As defined herein, the center of the lens is the point around which the lens 20 rotates during the edging process. The distance R in Fig. 4 is the displacement between the center of the lens and the center of the grinding wheel 10. The difference between r and R is the radius of the grinding wheel 10. The solid line curve of Fig. 7 is a graph of R as a function of the lens rotation angle Θ corresponding to the polar coordinate plot of Fig. 6. The solid line curve is the trajectory defined in the data stored in the lens trajectory memory 60 governing the motion of the lens blank 16 over the cylindrical portion 14 (only) of the grinding wheel 10.

### Uniform Wear Distribution During Lens Beveling:

The trajectory of the lens 20 during the beveling operation is more complex and depends upon the slope of the apex portion 14 of the grinding wheel 10 as well as the curvature of the lens 20 itself. Assuming that the lens shape depicted in the polar plot of Fig. 6 has no curvature --is perfectly flat-- the lens trajectory during the beveling operation may be obtained by superimposing the dashed sloped line of Fig. 7 onto the solid line curve and adding the two together. The resulting complex lens trajectory (dotted line) describes the lens trajectory relative to the grinding wheel 10 during beveling as the lens is translated axially across the surface of the apex portion 14 at a constant speed for uniformly distributing wear across the entire surface of the grinding wheel 10. The dotted line curve describes that portion of the lens trajectory in which the lens climbs up one side of the apex 14 and then descends down the other side so as to uniformly distribute wear across the surface of the apex portion 14. Thus, the dotted line curve of Fig. 7 corresponds to the data stored in the memory 60 for the beveling portion of the lens edging process.

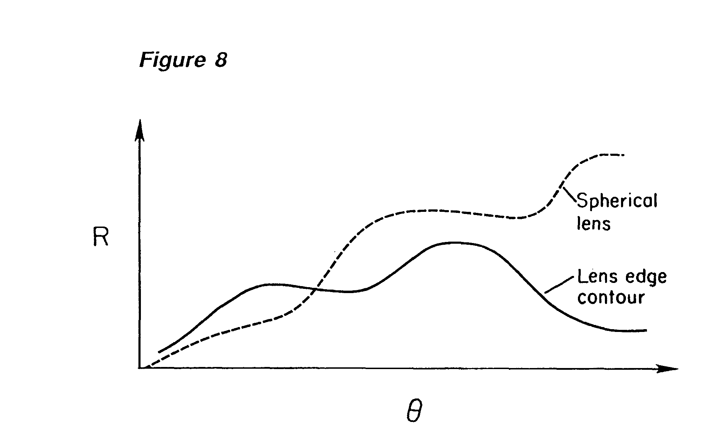

In most cases, however, the lens trajectory is even more complex during beveling because the lens typically has a spherical curvature (as depicted in the side view of the lens 20 in Fig. 1a). This complex lens trajectory may be obtained in the graph of Fig. 8 by summing the solid line curve defining the lens edge shape and the non-linear dashed line curve. The shape of the non-linear dashed line curve of Fig. 8 is dictated by the curvature of the lens and the included angle α of the apex portion 14 of the grinding wheel 10. Unlike Fig. 7, the resulting lens trajectory during beveling is not illustrated for the more complex case of Fig. 8, but is theoretically obtained by adding the two curves of Fig. 8 together. By varying the distance R between the lens 20 and the center of the apex 14, the depth to which the lens edge is beveled may be varied as desired.

A more practical method for obtaining the lens trajectory during beveling is to calculate it using spherical trigonometry, in accordance with well-known principles. A computer program for doing this is attached hereto as an Appendix. Such a computer program can be performed by the microprocessor 34 and may be stored in a lens motion program memory 64. Such a program merely requires the user to input the lens design data including the lens shape (as represented by the polar plot of Fig. 6), the lens curvature (visible in the side view of the lens of Fig. 1a for example) and the included angle α of the apex portion 14 of the grinding wheel 10. Such input data may be stored or entered at a peripheral device 66 illustrated in Fig. 3. The peripheral device may be a memory or a communication device such as a modem. Thus, a new lens design may be input from a distant remote location via modem (66) and the entire lens motion quickly and automatically calculated by the microprocessor 34 using the lens motion program in the memory 66. The resulting lens trajectory table is stored by the microprocessor 34 in the memory 60 along with corresponding tables for other lens designs. The entire procedure of changing or updating lens designs requires virtually no human presence at the system of Fig. 3, a significant advantage.

### How the Self-Correcting Feedback Loop Changes the Lens Trajectory as the Grinding Wheel Wears Down:

The difference between R and r is the radius of the grinding wheel 10, which decreases as the wheel wears down. As described previously herein, the self-correcting feedback method performed by the microprocessor 34 periodically compares the ideal lens radius at some predetermined lens rotation angle Θ against the correct radius at that angle as determined from the graph of Fig. 6. Any difference indicates the amount by which the grinding wheel radius has decreased from wear. The microprocessor 34 simply changes the trajectory by subtracting from all values of R in the graph of Fig. 7 (for example) the detected difference between the actual and ideal lens radius at some predetermined angle Θ.

The result is illustrated by the dash-dotted line of Fig. 7. The displacement E between the solid line and the dash-dotted line in Fig. 7 is the error or difference detected by the microprocessor 34 between the ideal and actual lens radii. Thus, as the grinding wheel radius decreases, the microprocessor 34 maintains the lens radius r as a function of lens rotation angle Θ at the correct value by decreasing R as necessary.

### Nature of the Lens Shape Trajectory Memory 60:

All parameters governing the lens edging process are defined in a table stored in the memory 60. Already discussed herein are the lens shaping parameters r and Θ as well as the continuous axial feed velocity required to achieve uniform wear of the edging tool. Remaining parameters include the rotational rate of the lens (dΘ/dt), the grinding wheel speed and the force with which the lens edge is pressed against the wheel.

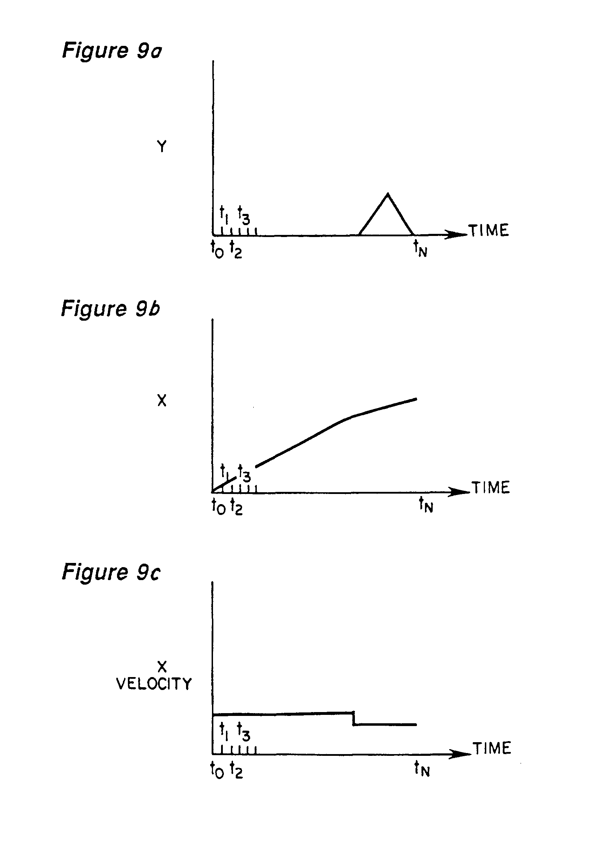

To implement discrete control by the microprocessor 34, the motion of the lens, as defined by the vector (r,Θ), is divided into N discrete segments. In the following example, N = 64,000, although it should be recognized that the skilled worker may choose any suitable value for N. These segments may be thought of as N points in time t₀, t₁, t₂, ..., t_{N} covering the entire duration of the edging process. The displacement Y of the center of the lens from the axis of the wheel 10 as a function of time is illustrated in Fig. 9a. The triangular hump in Fig. 9a corresponds to the beveling portion of the process. Fig. 9b is contemporary with Fig. 9a and illustrates the position X of the center of the lens along the axis of the grinding wheel as a function of time. In the tutorial example of Fig. 9b, the feed velocity (dX/dt) of the lens is smaller during the beveling portion of the process. This is illustrated in Fig. 9c. However, it should be understood that any sequence or variation of feed velocities is possible.

Fig.'s 9a, 9b and 9c correspond to the lens trajectory indicated in Fig. 4 in which the lens blank 16 constantly travels axially across the grinding wheel 10. All of the parameters mentioned previously may be plotted in like fashion. Such plots are divided into N points (in the manner of Fig.'s 9a, 9b and 9c) and digitized to represent the data stored in the memory 60.

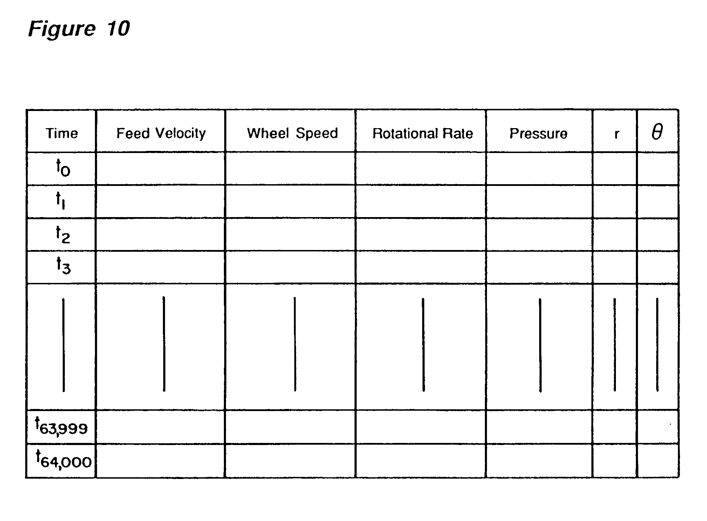

Fig. 10 illustrates the format of the data stored in the memory 60 in a table. At each one of the 64,000 points into which the process has been divided (labelled t₀, t₁, t₂, etc.) the table of Fig. 10 defines the lens axial feed velocity, the wheel speed, the lens rotational rate, the grinding force, the displacement r and the lens rotation angle Θ. At each point tᵢ of the process, the microprocessor 34 fetches from the table of Fig. 10 (stored in the memory 60) the corresponding value for each one of the foregoing parameters and determines therefrom any changes in the servo control signals it sends to the lens servo controller 54, the grinding wheel motor 70 and the lens rotation motor 58. The lens servo controller 54, by governing the motion of the lens servo arm 52, controls the rate of axial translation of the lens along the axis of the wheel 10, the rotation of the lens as well as the distance r of the center of the lens from the surface of the grinding wheel 10.

The skilled worker may devise various practical embodiments of the table of Fig. 10, in which some of the foregoing parameters are eliminated as redundant or unnecessary, a mentioned previously. For example, specifying the lens rotation angle Θ at each of the N points in time may obviate the need to specify the lens rotation rate dΘ/dt at each of the N points.

### Trial and Error Programmed Learning Process:

There is no known method for computing the optimum values for all of the foregoing parameters at each of the N = 64,000 points into which the lens edging process has been divided in the table of Fig. 10. In accordance with the invention, the "optimum" set of values for all parameters at each one of the N points is defined as that set which results in the greatest productivity without harm to the glass lens material. Such harm is evidenced by visible sparking (combustion of glass particles) during edging or poor surface finish on the lens edge following the edging process.

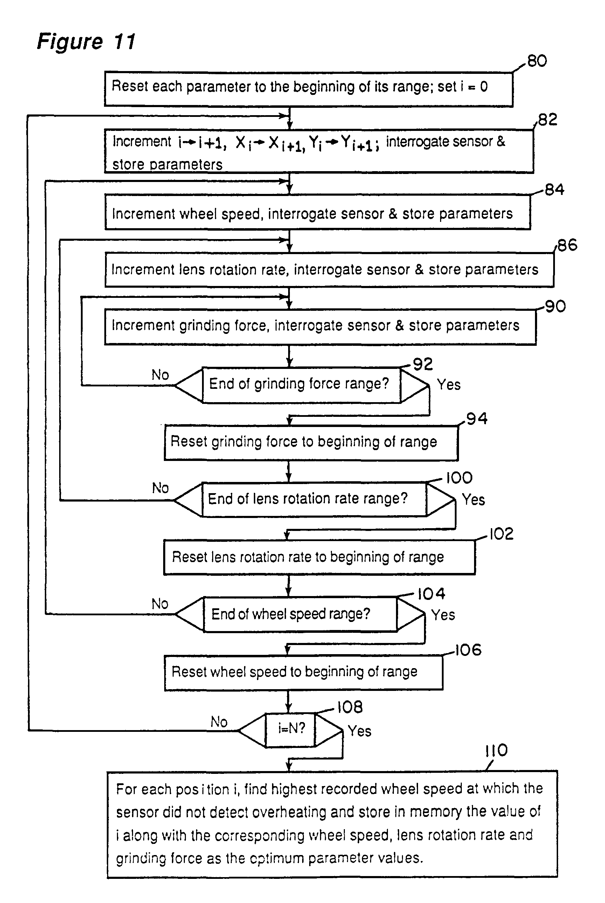

The method for programming the memory 60 and operating the system of Fig. 3 with the optimum values of the parameters of the table of Fig. 10 begins with the preparatory learning steps illustrated in the flow diagram of Fig. 11. Essentially, the parameters are all varied at each one of the N points into which the process has been divided in the table of Fig. 10 and the combination of parameter values having the highest glass lens material removal rate by the grinding wheel without evidence of harm to the material is selected as the optimum set for that point in the process. This task is performed N times to find the optimum combination of parameter values at each one of the N points.

In the embodiment of Fig. 11, this method employs a spark sensor 72 (such as an infrared sensor) illustrated in Fig. 3 positioned to sense any sparking of glass particles removed by the grinding wheel 10 from the lens blank 16. The microprocessor 34 causes the system to automatically and systematically step through all possible combinations of all the parameters of the table of Fig. 10 at each one of the N points in the lens edging process (blocks 80 through 108 of Fig. 11). For each combination of parameter values, the microprocessor 34 interrogates the spark sensor 72 to determine whether that combination is permissible. After all the data has been stored, the microprocessor 34 finds the highest permissible grinding wheel speed and stores it along with the values of the other parameters stored concurrently in the table of Fig. 10 in the memory 60 (block 110 of Fig. 11). The microprocessor 34 thus fills all entries in the table of Fig. 10 by performing the foregoing task for each one of the N points into which the lens edging and beveling process has been divided.

In the simplified example of Fig. 11, for the sake of tutorial clarity it is assumed that the linear feed velocity at which the lens blank 16 is translated axially across the surface of the grinding wheel 10 is constant during the entire edging process and is reduced to another smaller constant velocity during the beveling process. However, it should be recognized that this simplification is not necessary and in many cases will not be used in carrying out the invention. With this simplification, each point in time tᵢ is easily associated with a certain Xᵢ,Yᵢ location of the lens blank 16 in accordance with the plots of Fig.'s 9a and 9b. A realistic range for each of the parameters of the table of Fig. 10 (grinding wheel speed, etc.) is chosen.

The learning process begins by setting each of the parameters to the beginning of its range and initializing the index i to zero (block 80 of Fig. 11). The Xᵢ,Yᵢ position of the lens blank 16 is then incremented to the next (i + 1^{st}) position and the microprocessor 34 interrogates the spark sensor 72 and stores the current value of all the parameters of the table of Fig. 10 if the spark sensor 72 does not detect overheating of the glass lens material (block 82 of Fig. 11). The wheel speed is then incremented and the microprocessor 34 repeats the same interrogation and storing task as before (block 84). Next, the lens rotation rate is incremented and the microprocessor 34 repeats the same interrogation and storing tasks as before (block 86). Then the grinding force is incremented and the microprocessor 34 repeats the same interrogation and storing tasks as before (block 90).

The step of block 90 is successively repeated in an inner loop until the grinding force reaches the end of its range (block 92) at which point it is reset to the beginning of its range (block 94). Then, the step of block 86 is successively repeated in an outer loop, each such repetition including a complete cycling of the inner loop until the lens rotation rate reaches the end of its range (block 100) at which point it is reset to the beginning of its range (block 102). Next, the step of block 84 is successively repeated, each such repetition including complete cycling of the inner and outer loops in the manner previously described until the wheel speed reaches the end of its range (block 104) at which point it is reset to the beginning of its range (block 106).

If the lens blank has not reach the end of its travel (block 108), the process returns to step of block 82 and repeats itself. Otherwise (YES branch of block 108), the microprocessor 34 begins analyzing the data stored in the previous steps (block 110). In the step of block 110, the microprocessor 34 reviews all of the combinations of parameters recorded for each one of the N locations Xᵢ,Yᵢ in the trajectory of the lens blank 16. At each location, the microprocessor determines which combination had the highest grinding wheel speed, and records that combination (only) in the table of Fig. 10 at the corresponding value of tᵢ.

The flow diagram of Fig. 11 illustrates one of many possible trial and error learning processes which may be implemented. In the process of Fig. 11, the optimum combination of parameter values is defined simply in terms of the greatest grinding wheel speed and a spark sensor is employed. Alternatively, another definition of the optimum combination of parameter values may be employed. As another alternative, a measurement of the surface finish may be substituted instead of the spark sensor 72. Of course, some of the foregoing parameters may be eliminated or other equivalent parameters substituted therefore.

One advantage of the programmed learning process of Fig. 11 is that increasing the rate at which the grinding wheel 10 removes material from the glass lens blank 16 increases the rate at which heat is removed from the blank 16, so that the optimum upper limit for grinding speed may be much higher than expected. Generally, however, acceptable results characterized by an RMS surface finish of the lens edge of between 32 and 250 is achieved by grinding wheel speeds in the neighborhood of 2,500 RPM, a lens rotation rate of 20 RPM and an axial lens feed rate of 30 inches/minute. Preferably, the included angle of the apex portion 14 of the wheel 10 is 113°.

Preferably, the microprocessor 34 is part of an AT computer system of the well-known type in which the microprocessor controls a 20 mega-byte hard disk memory 80 through a disk drive controller 82 and controls a monitor 84 through a video controller 86. Commands may be sent to the microprocessor by an AT keyboard terminal 88. The memories 60, 62 and 66 are all individual memory locations in the hard disk memory 80. An operator may use the keyboard terminal 88 to have the microprocessor 34 display on the monitor information regarding the lens edging process performed by the system of Fig. 3. Also, the operator may use the keyboard terminal 88 to begin or interrupt or modify the process, for example to permit new lens design data to be recieved through the modem 68 and stored in the memory 80. The operator may also use the keyboard terminal 88 to command the microprocessor to begin the programmed learning process of Fig. 11. Preferably, the process of Fig. 11 is implemented in a software program stored in the memory 80.

### APPENDIX

1. Program to prompt user for radii and radii locations.
2. Program to establish the orientation of the lens in the pressing.
3. Program to compute pressing data.
4. Program to build an object from radii and centre locations - "Lens edge".

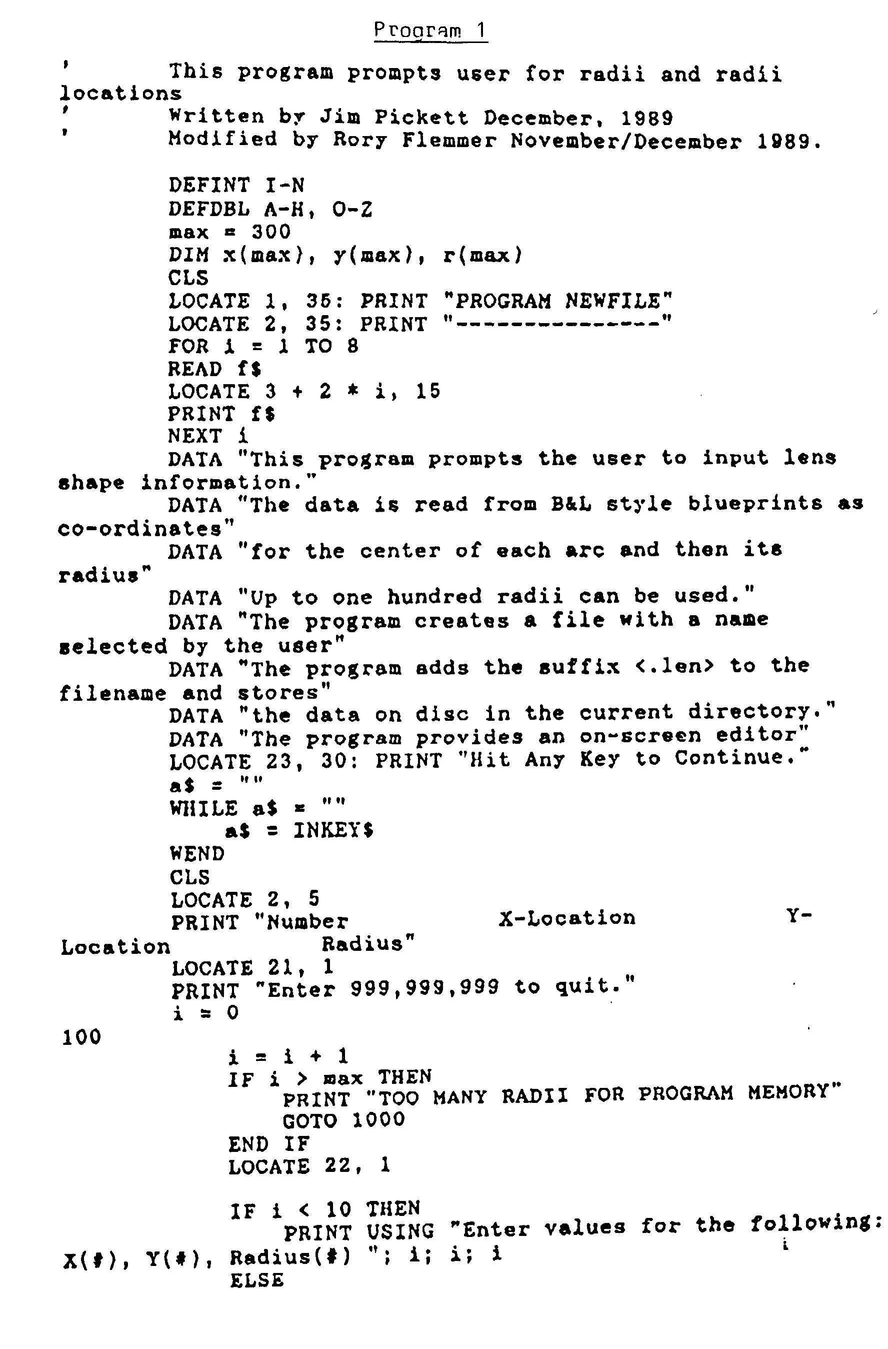

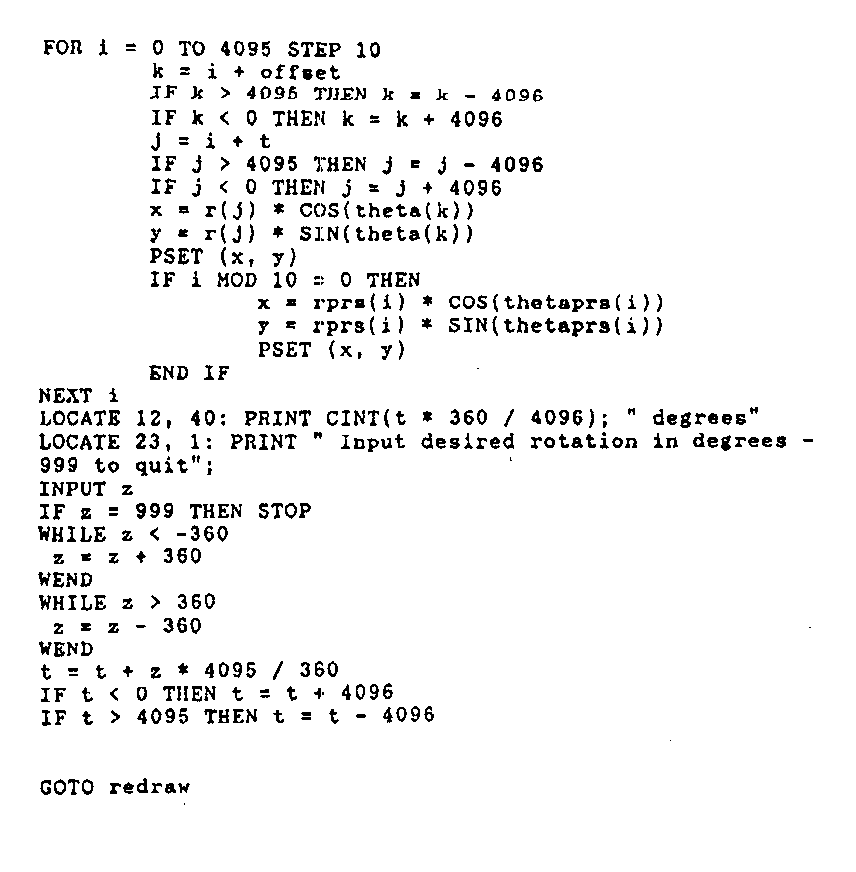

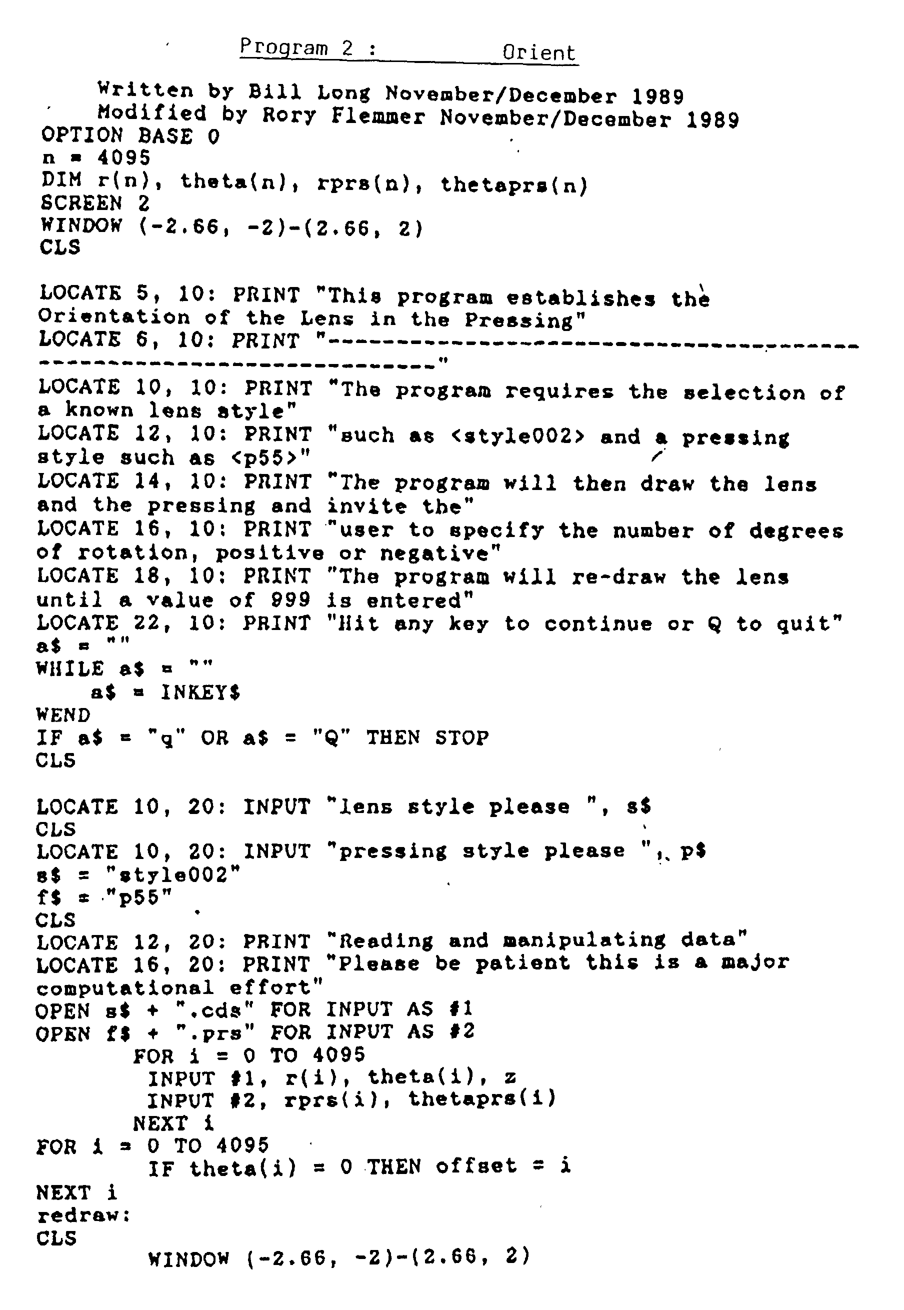

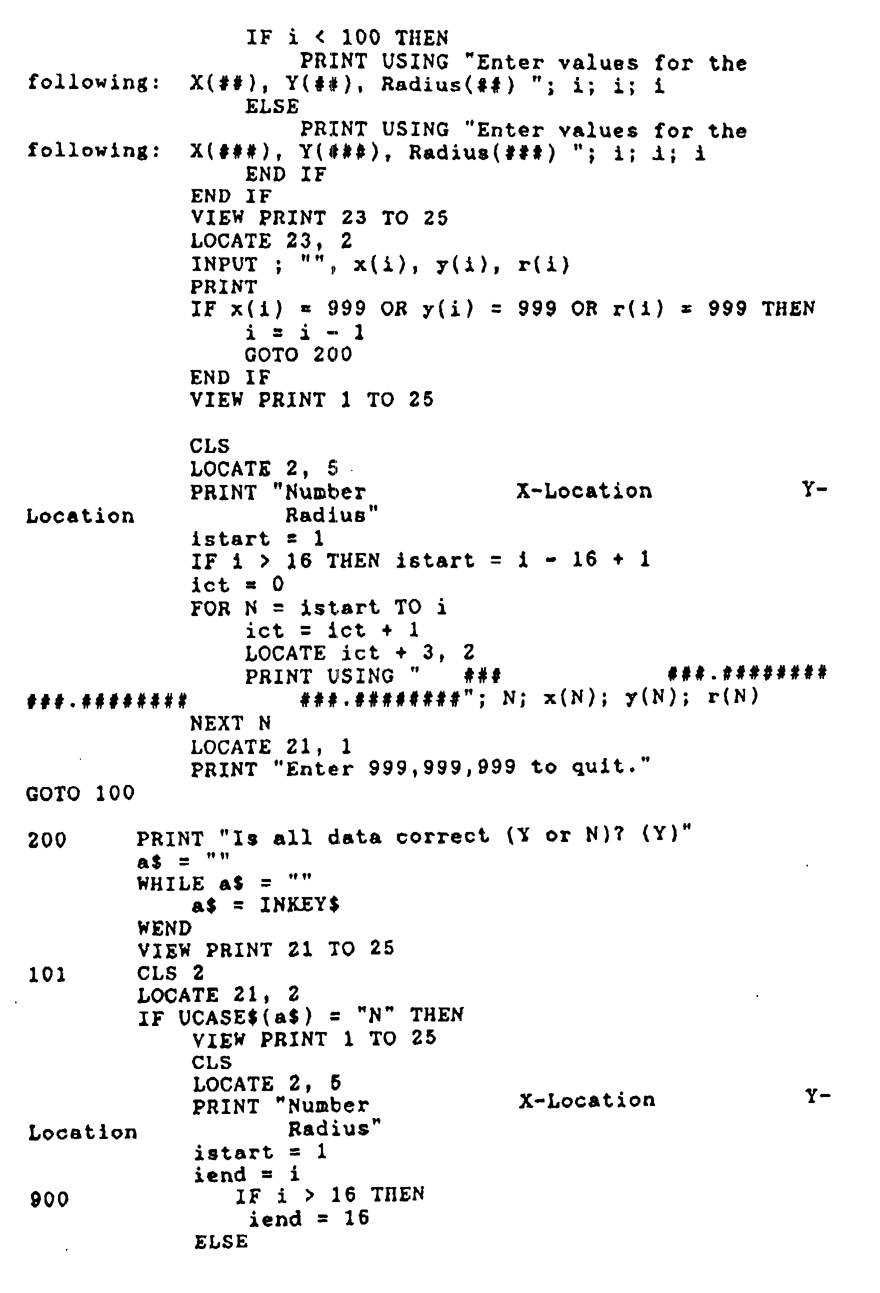

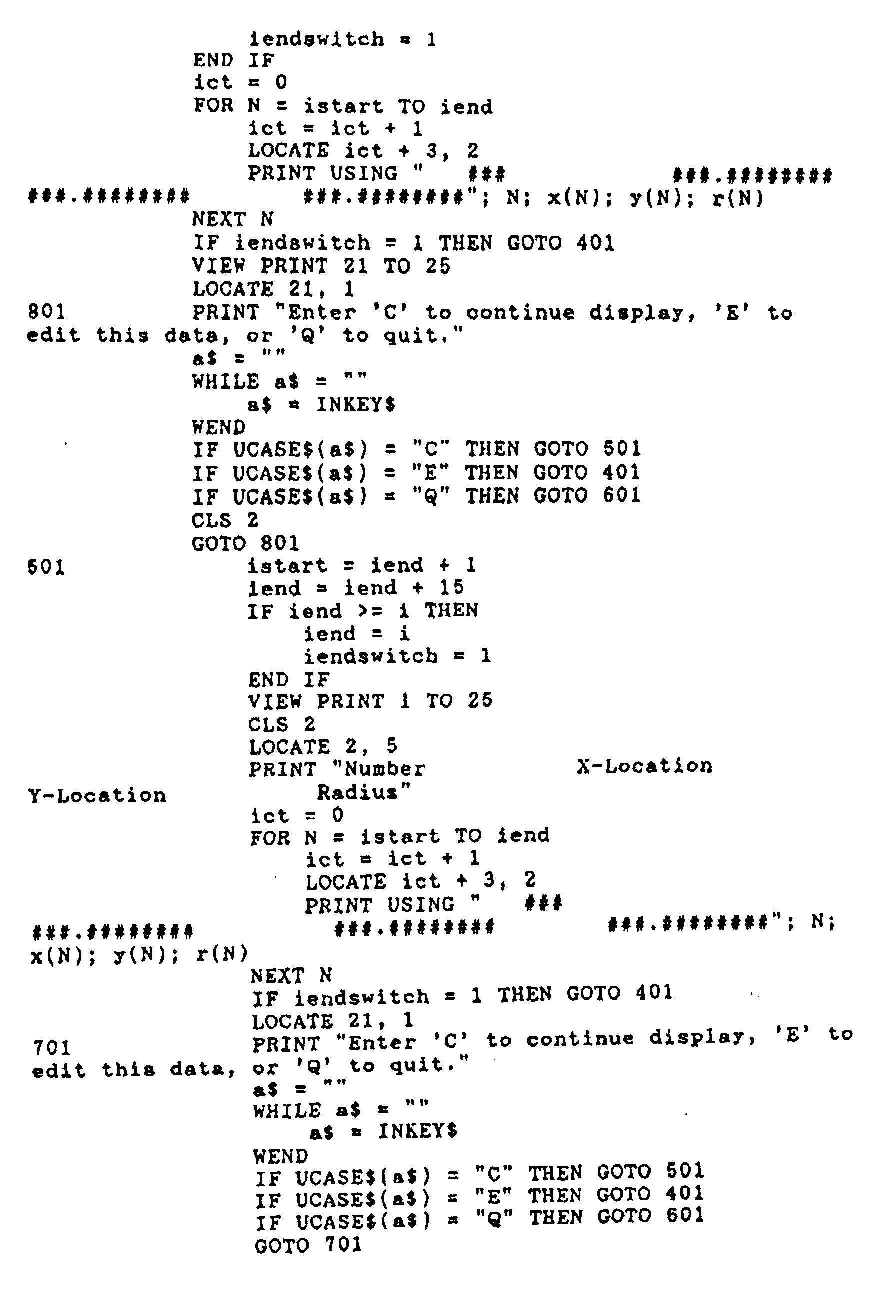

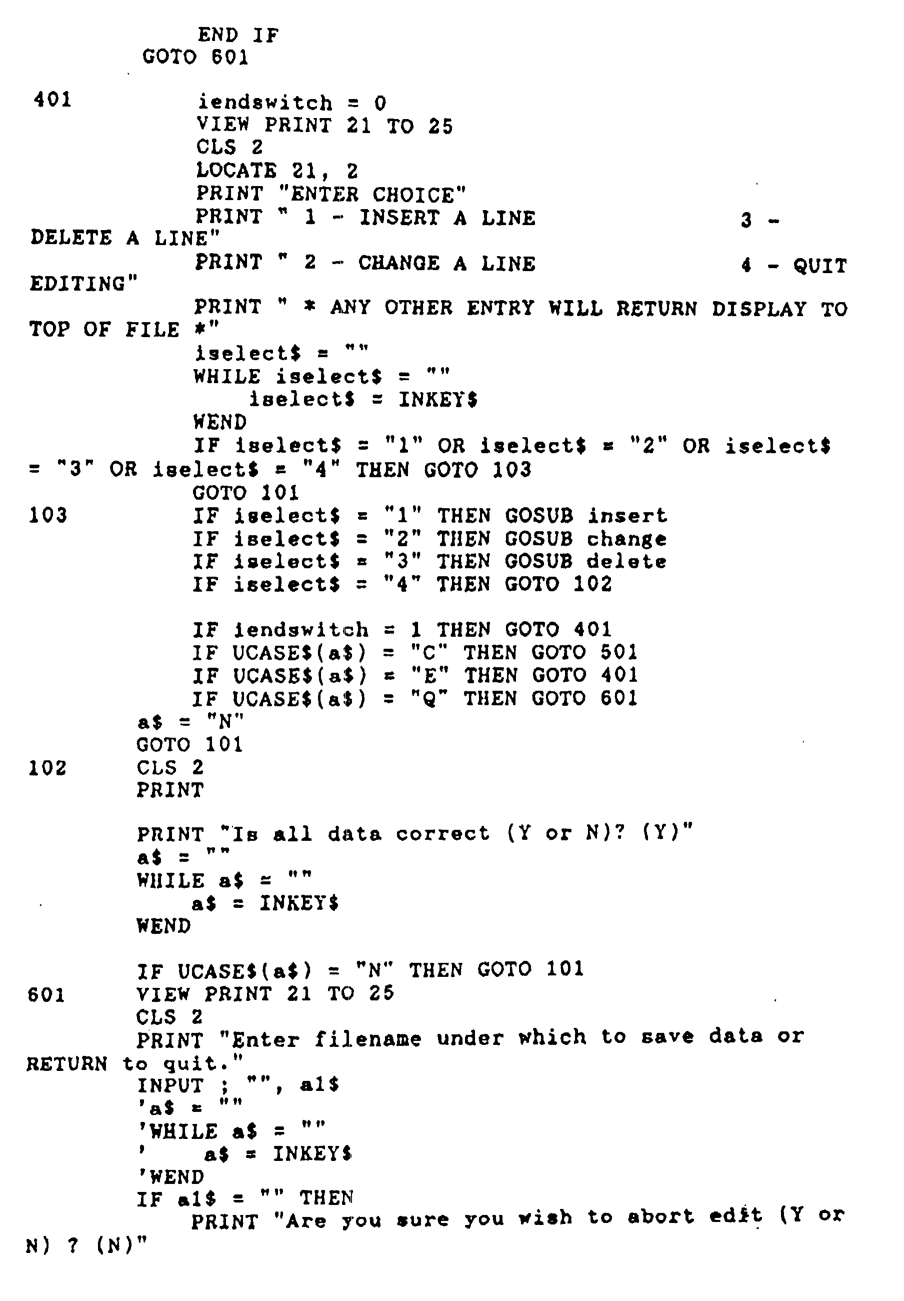

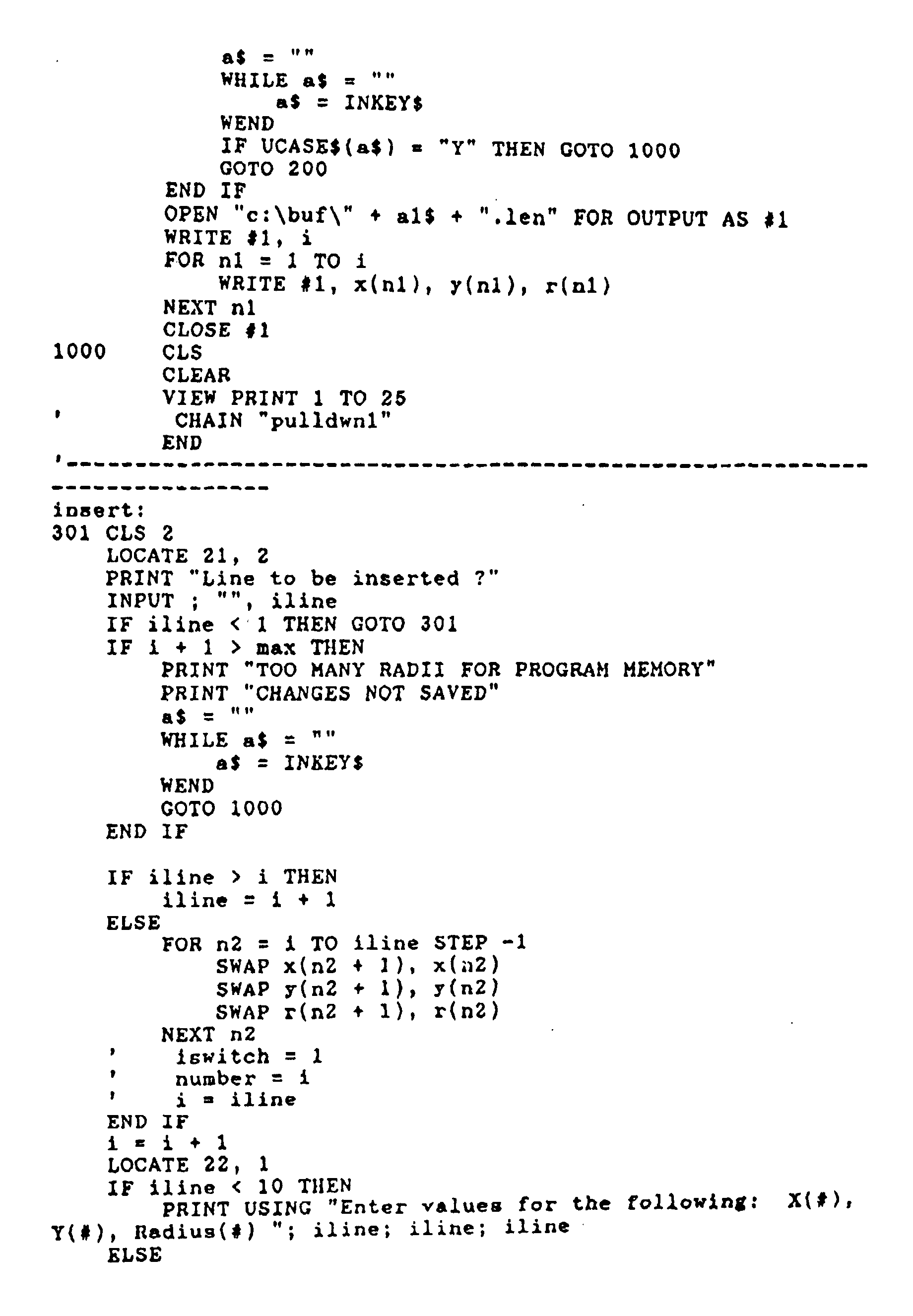

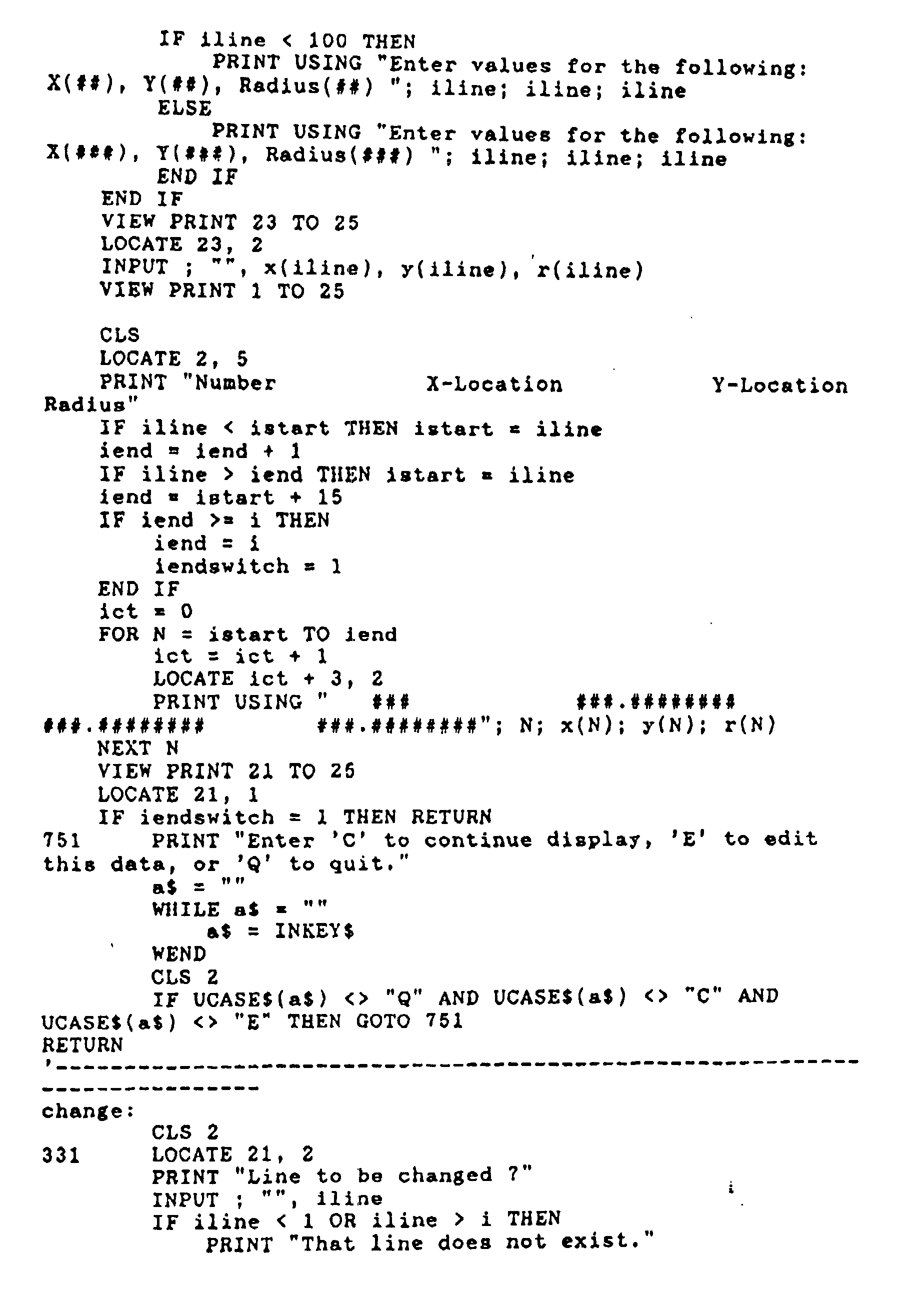

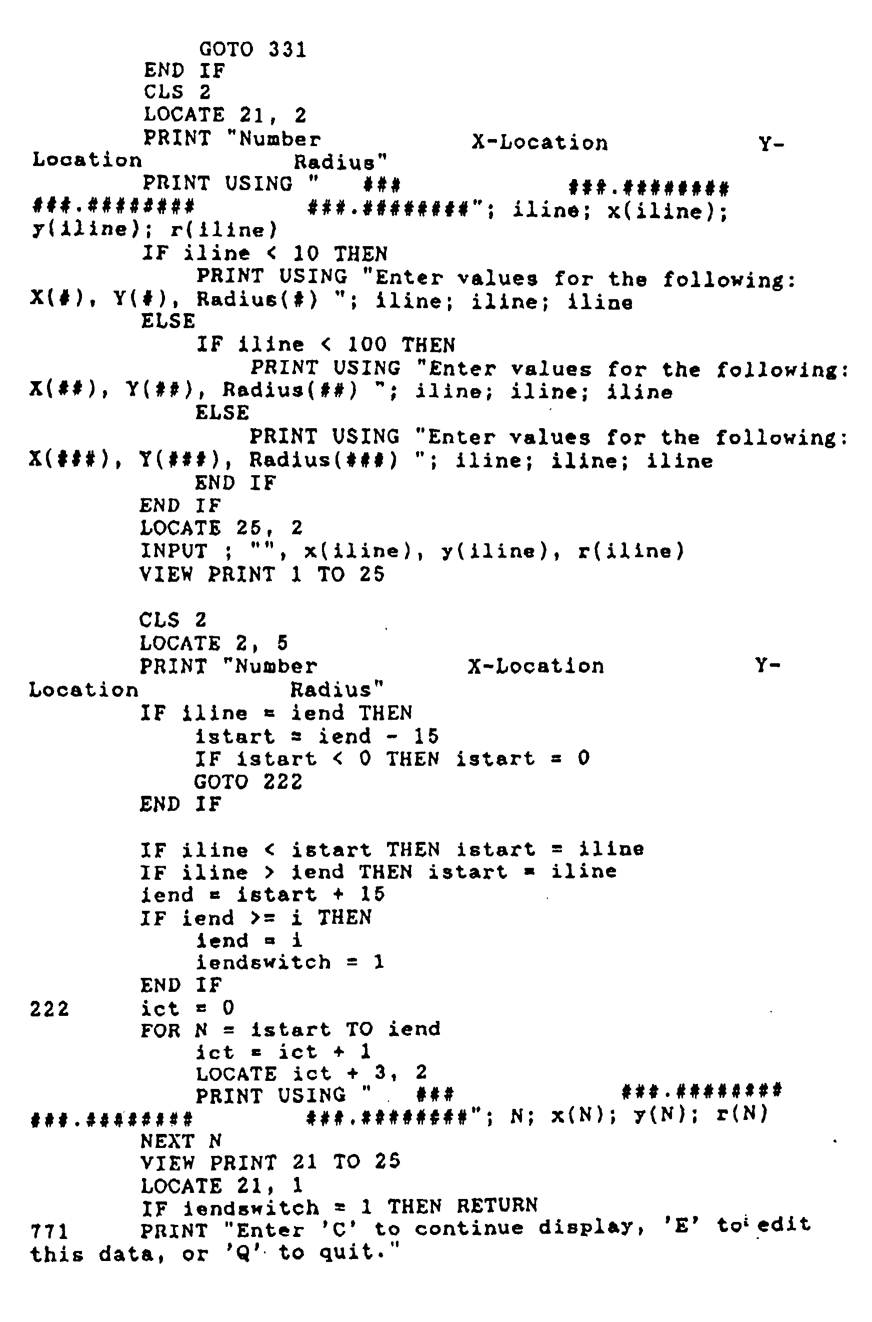

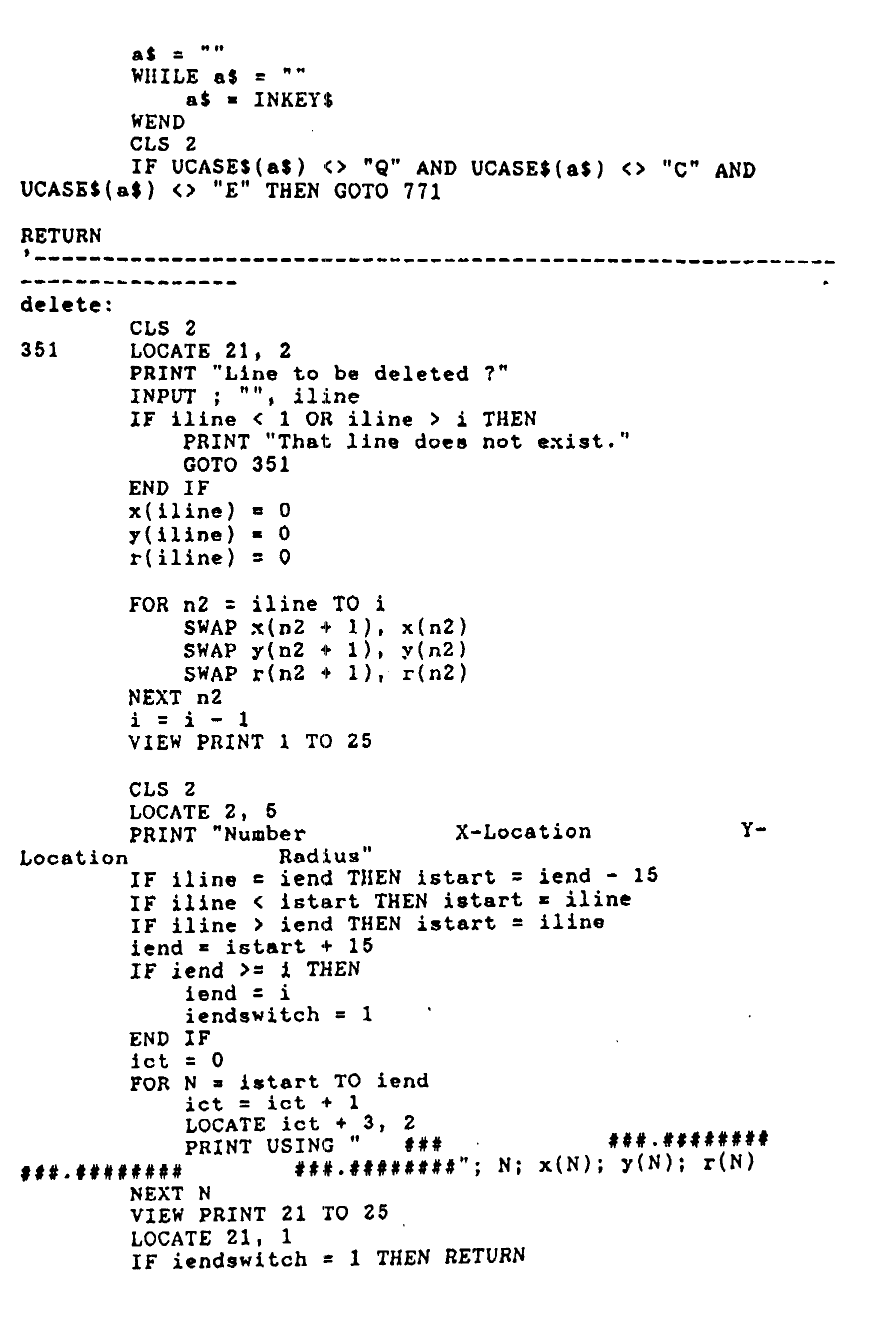

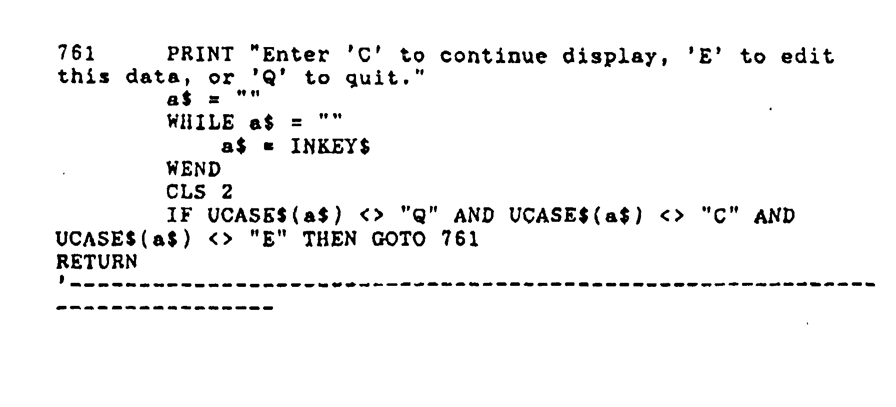

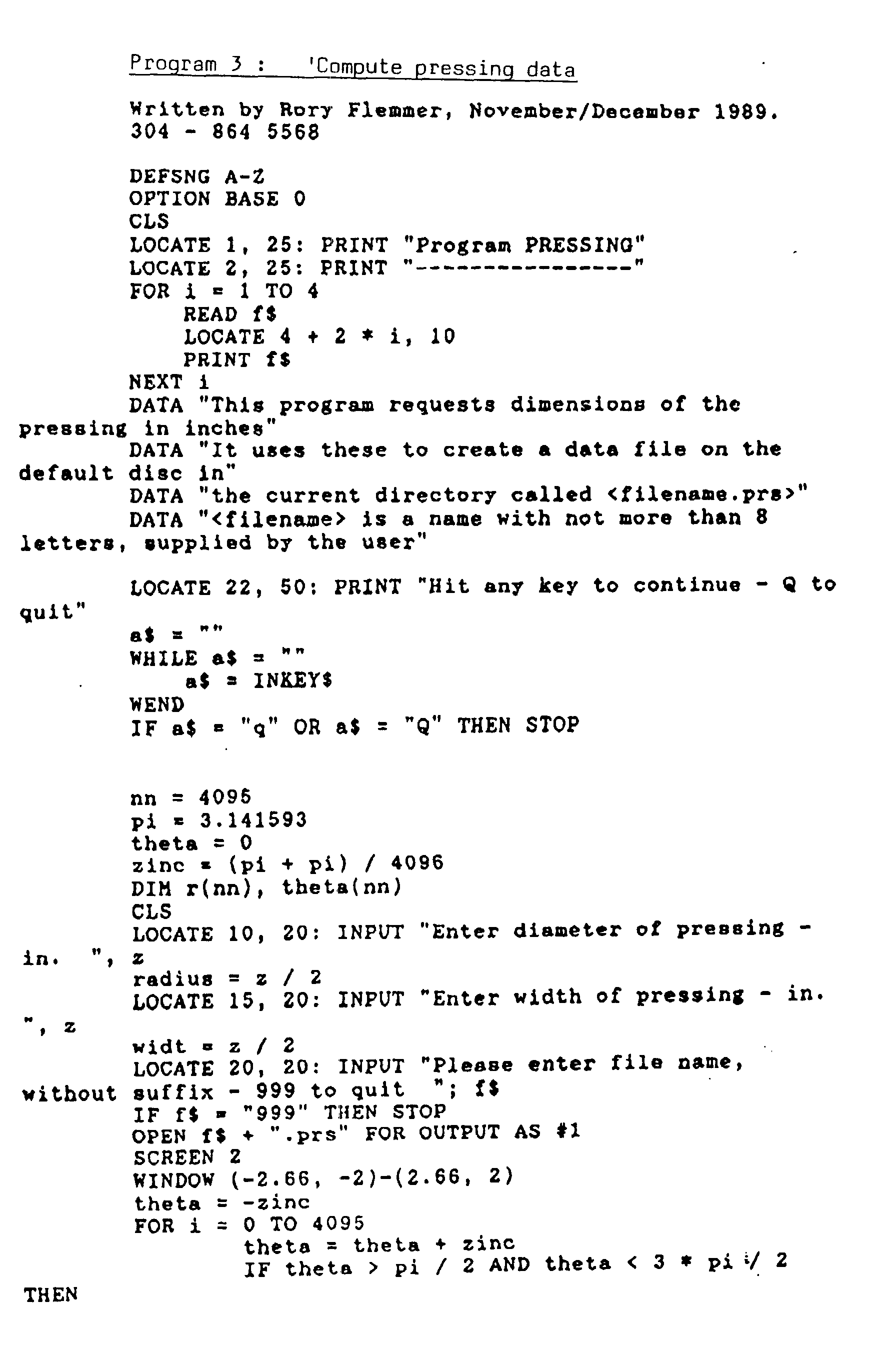

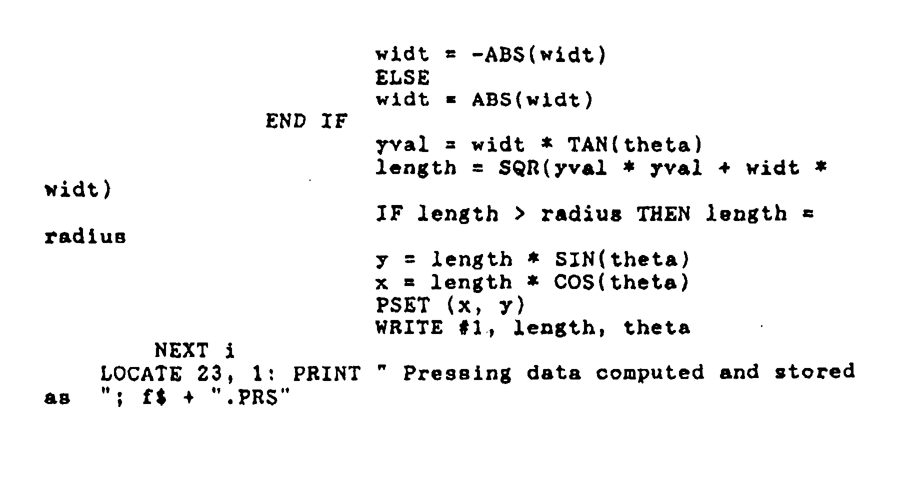

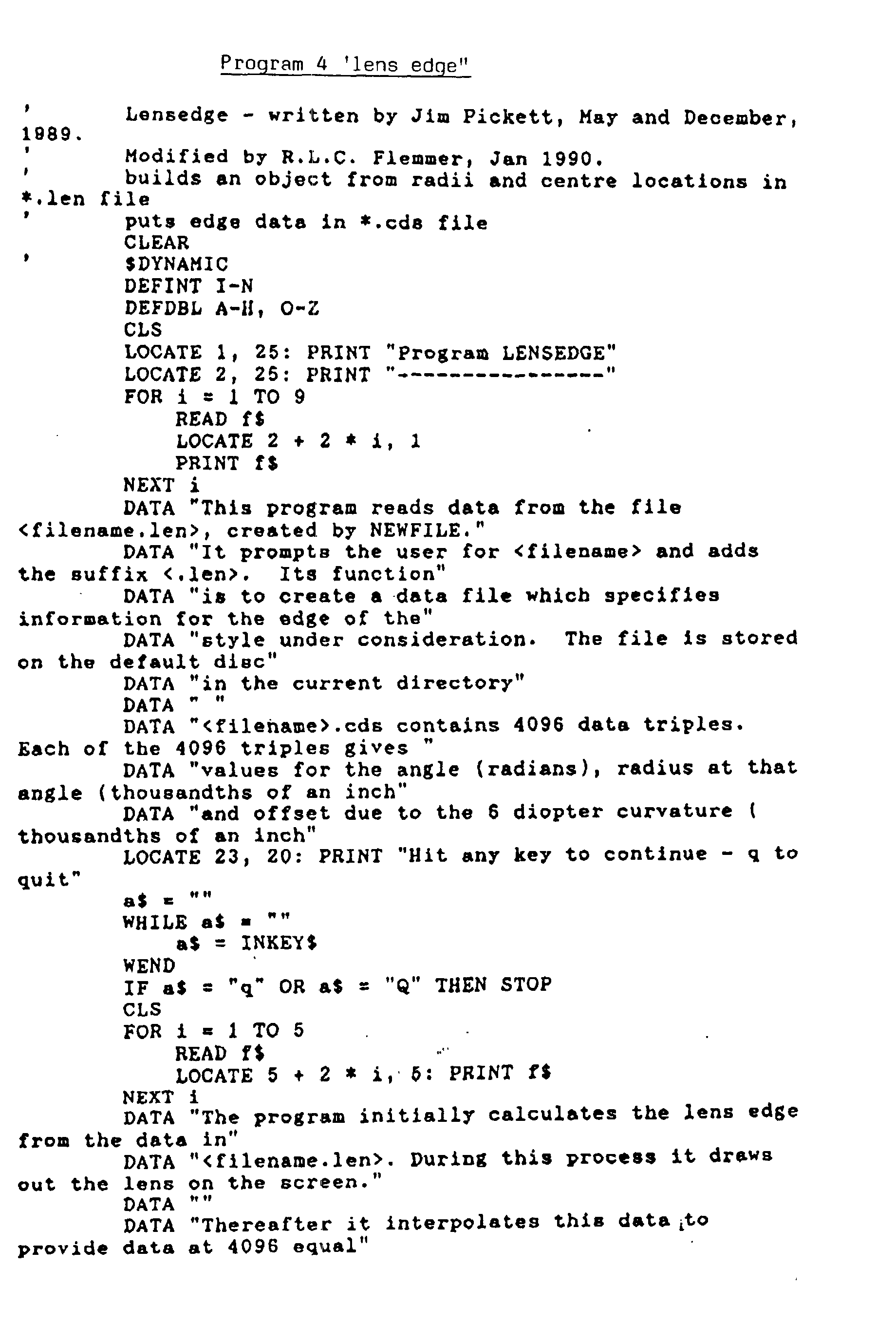

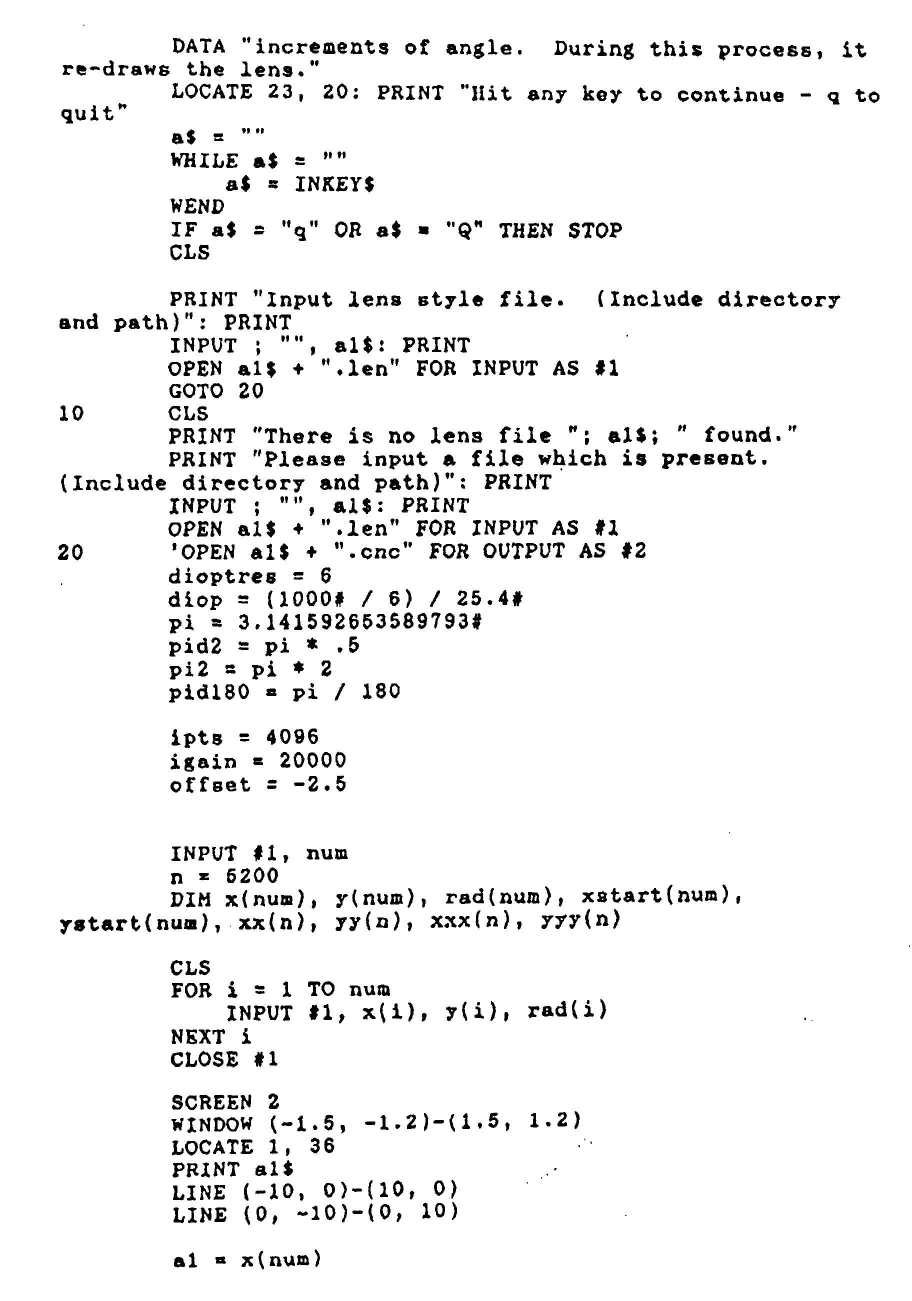

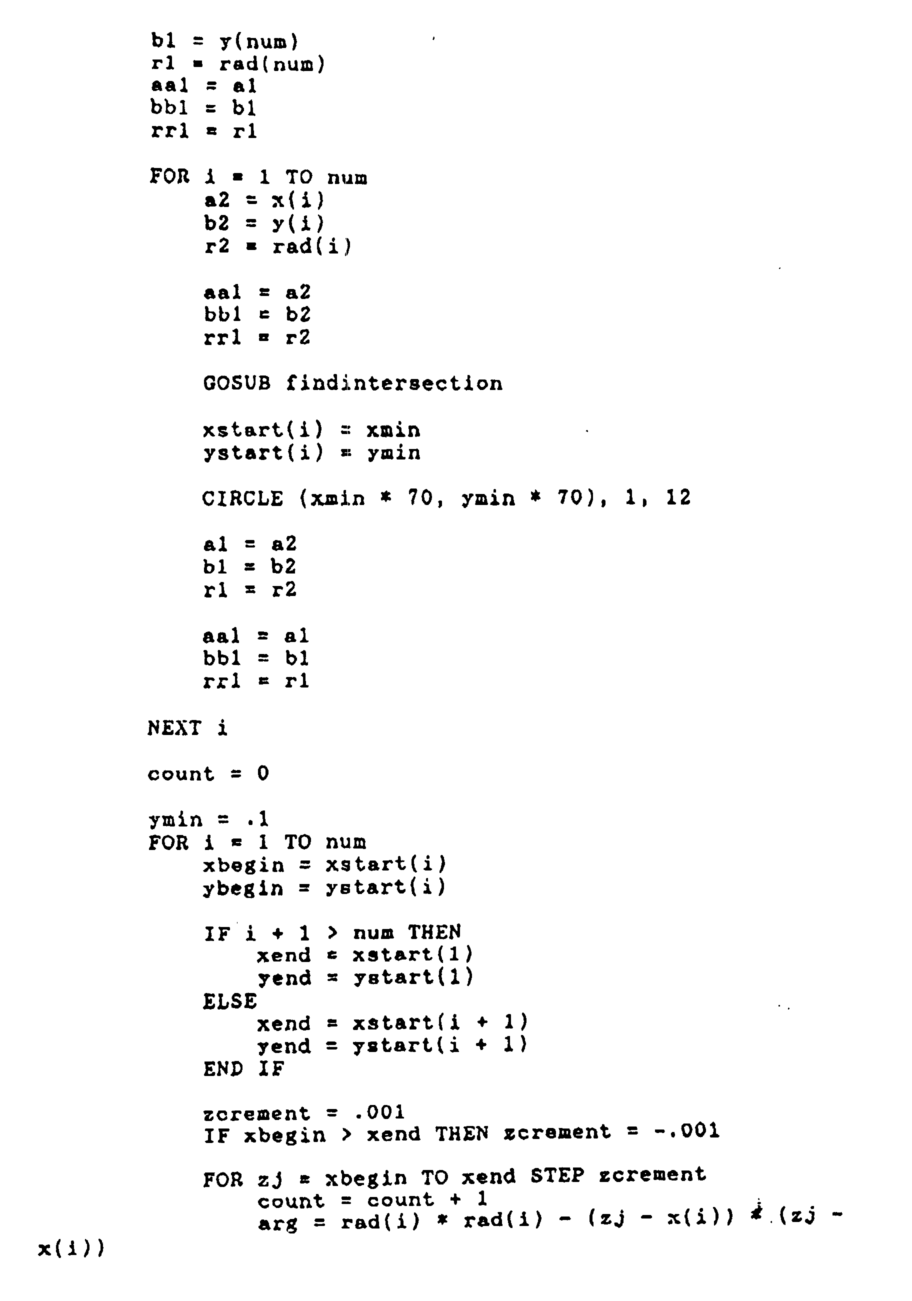

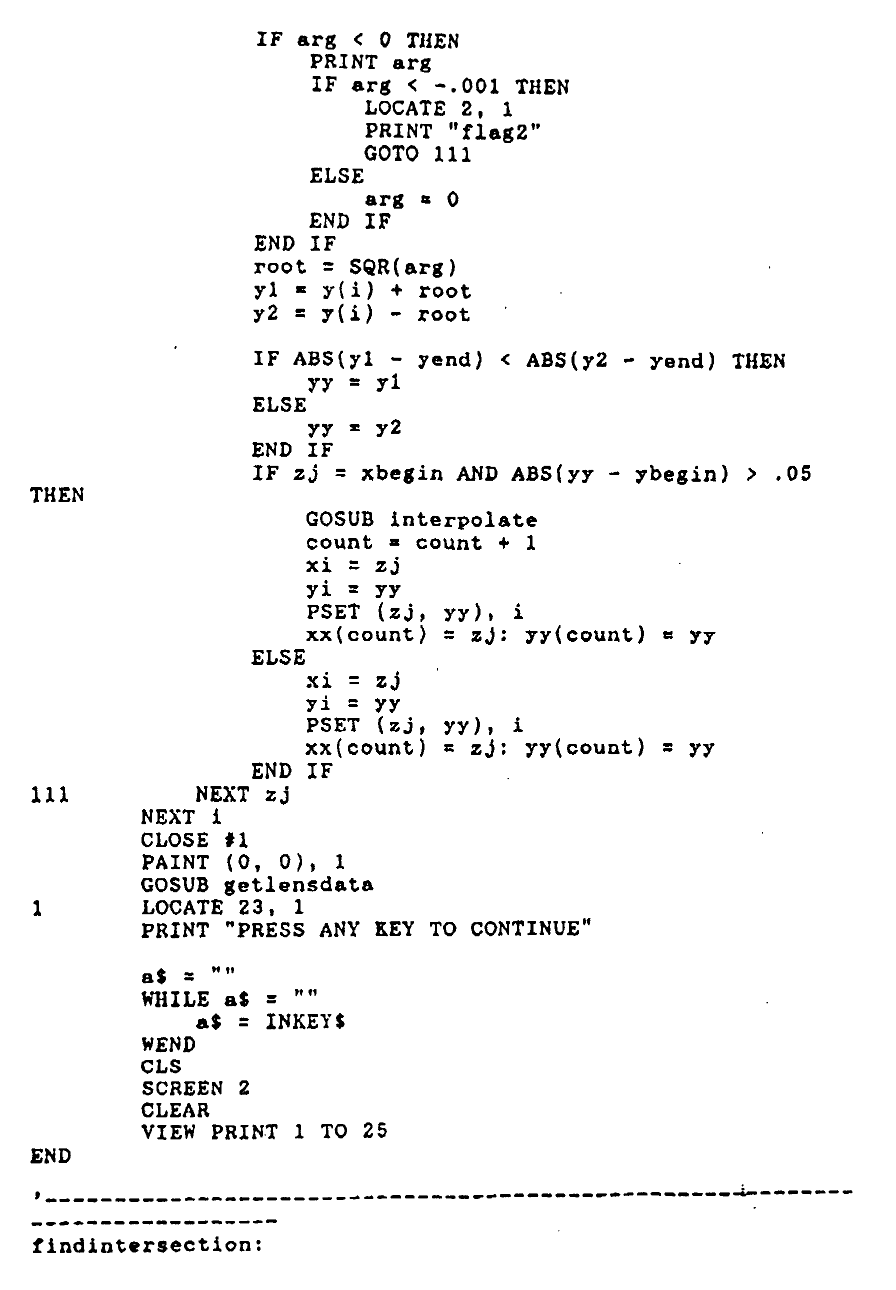

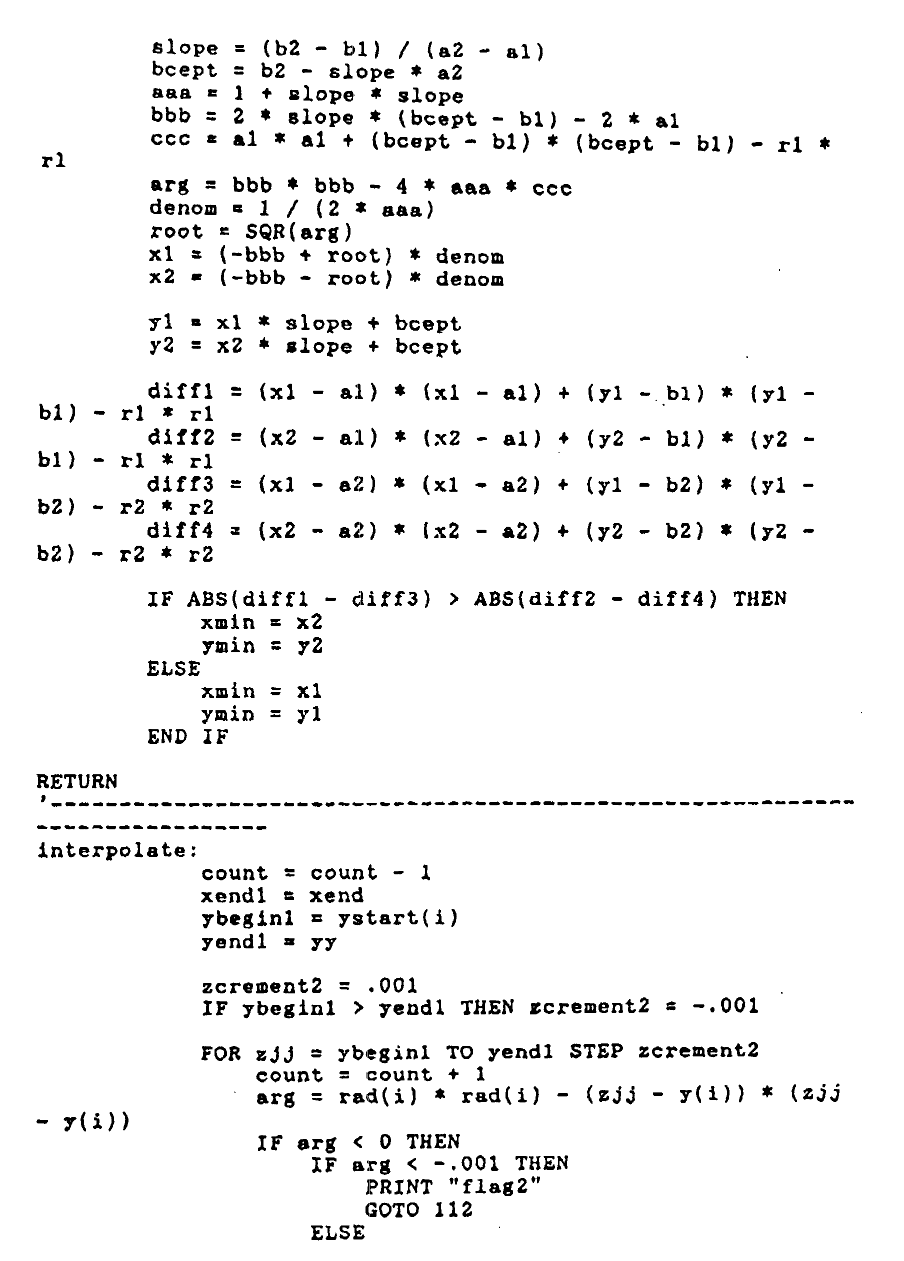

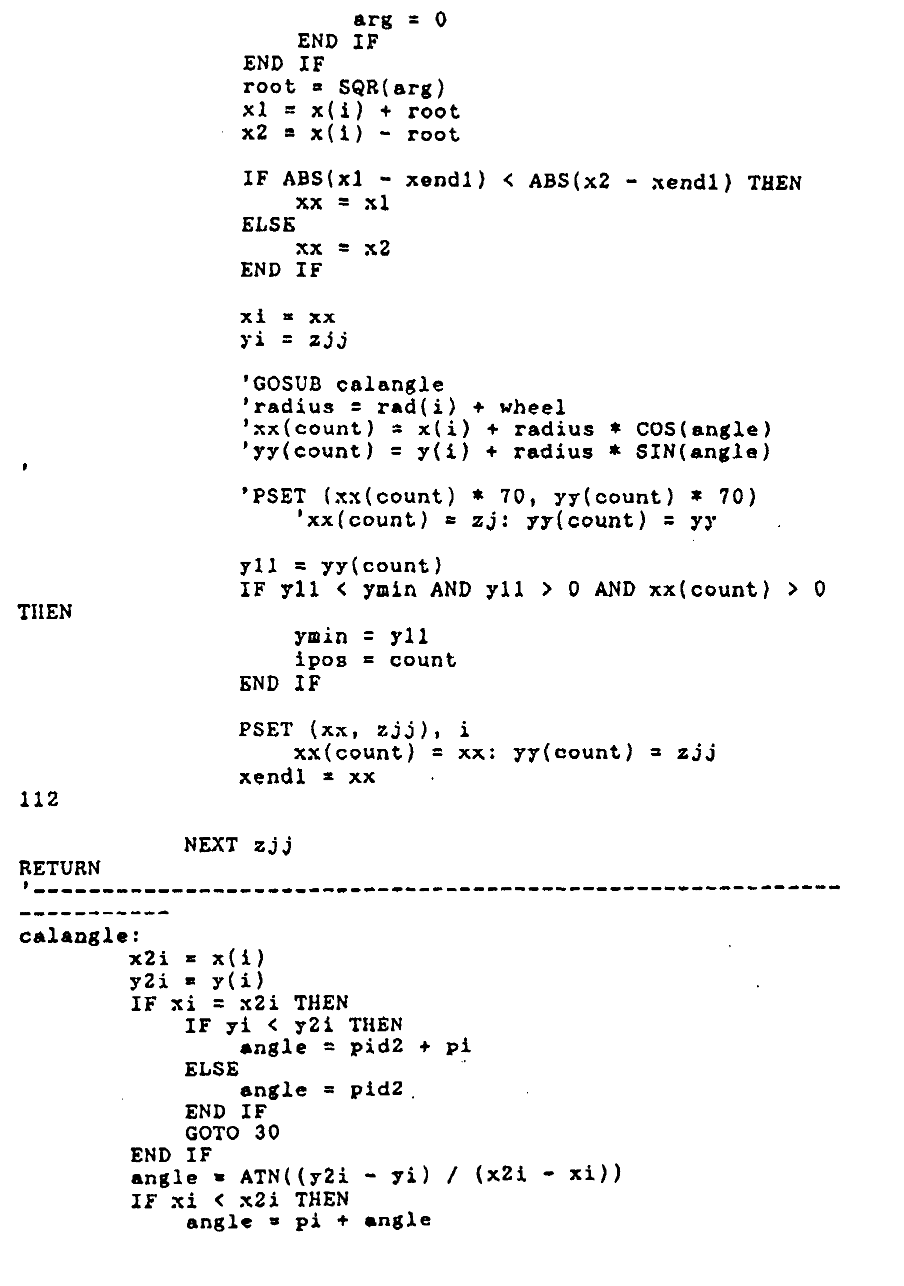

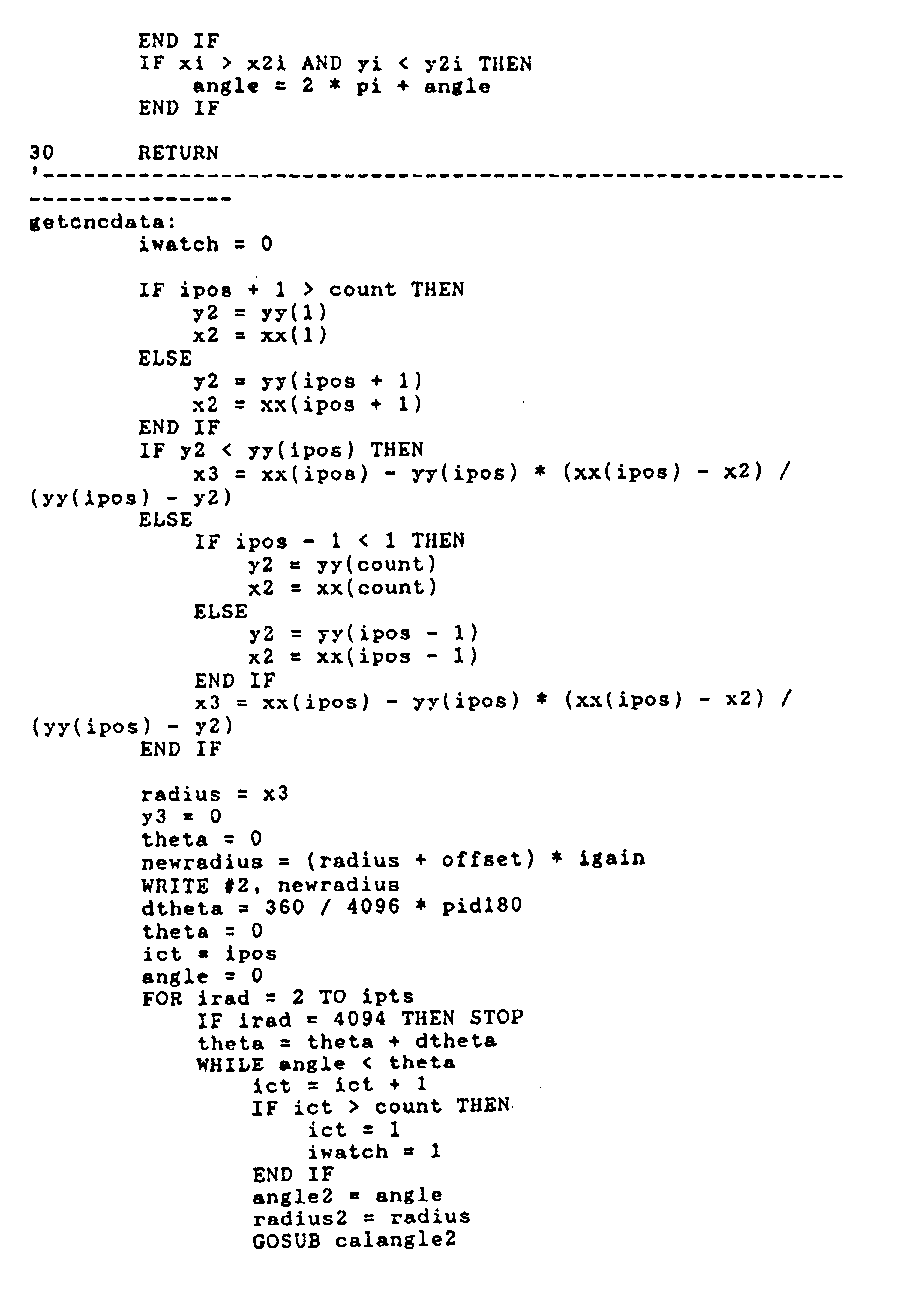

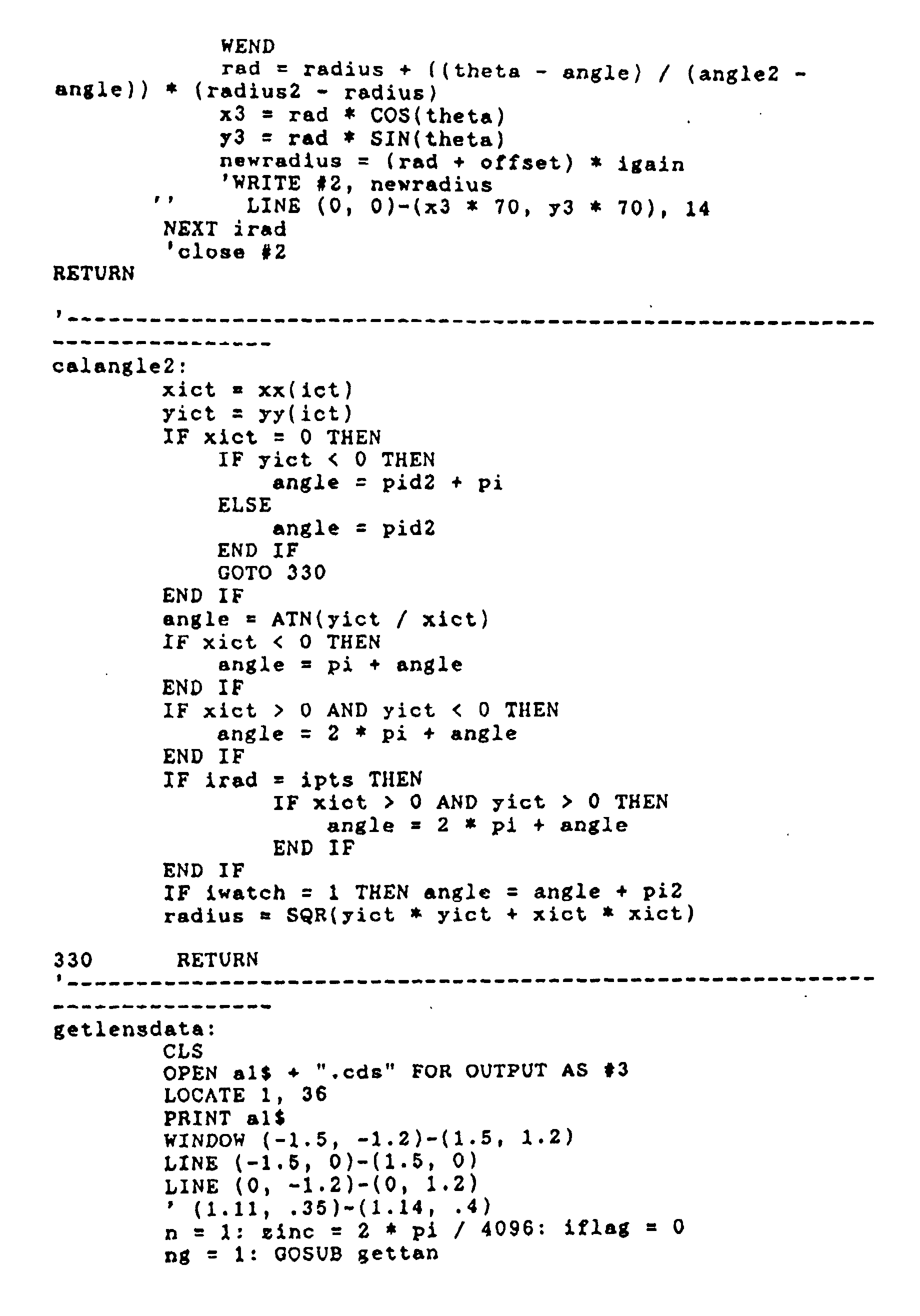

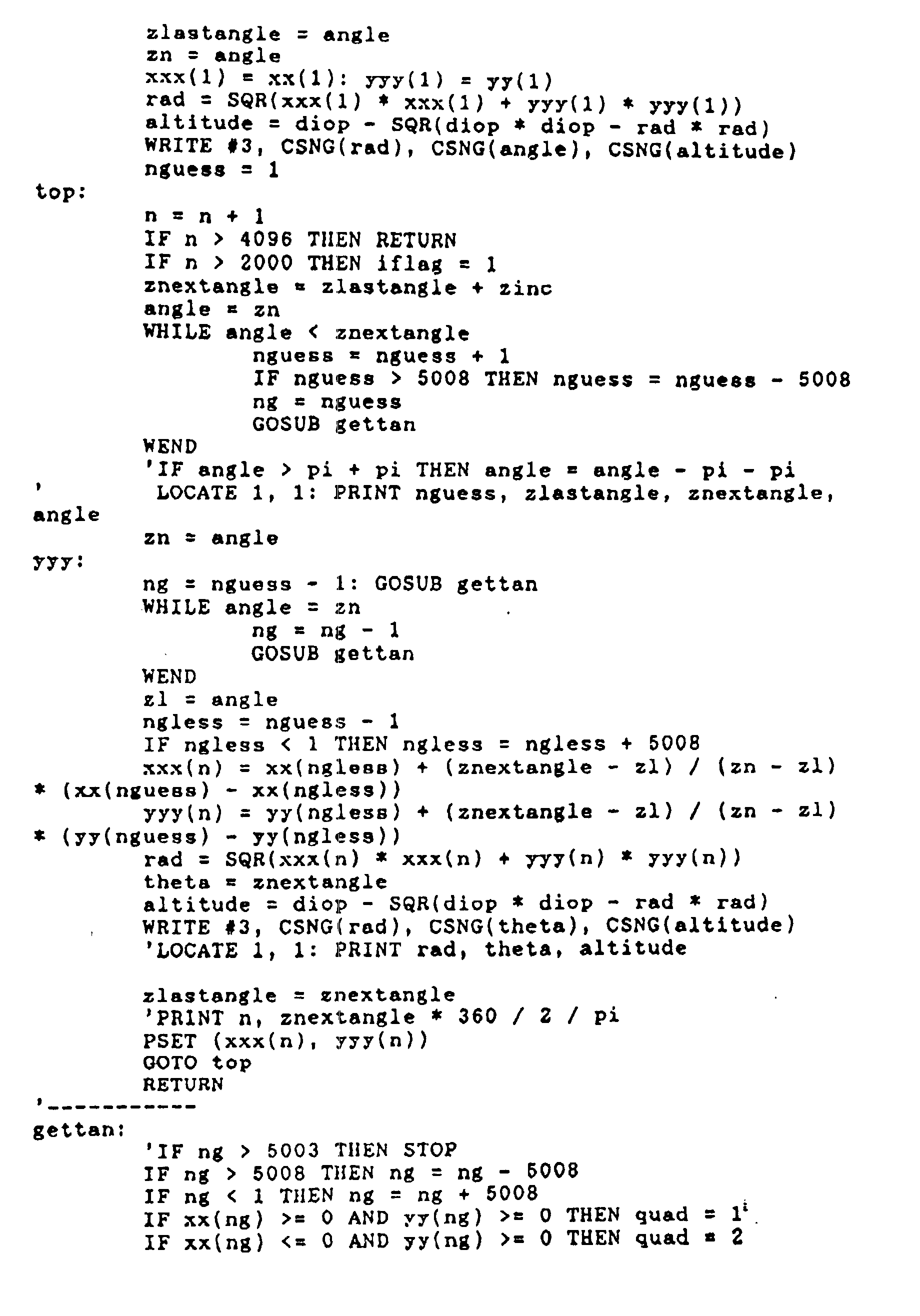

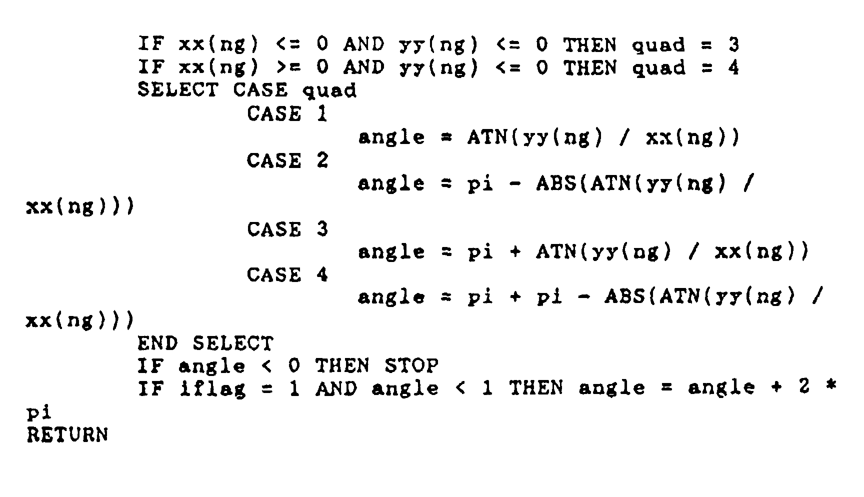

## Claims

1. A lens edging apparatus comprising
an edging tool rotatable about a first axis and having a grinding surface (10);
means (52) for holding a lens workpiece (16) which is to be shaped, said holding means being operable to rotate the lens workpiece about a predetermined axis parallel to said first axis to a succession of angular positions and being axially movable to alter the axial position of the lens workpiece relative to the edging tool;
means (60) for storing data relating to the radial position of the lens workpiece relative to the edging tool for each of said succession of angular positions;
said holding means (52) being operable to continuously move the lens workpiece along said predetermined axis at a controlled axial velocity and thereby across the grinding surface of said edging tool;
said data storing means (60) being operable to store data relating to the axial position of the lens workpiece with respect to said succession of angular positions in order to establish a lens trajectory with respect to the grinding surface of the edging tool which comprises a succession of lens rotation angles, a corresponding succession of lens radii and a corresponding succession of axial positions with respect to the grinding surface of the edging tool; said data storing means (60) also being operable to store data defining the velocity at which the lens is translated axially across the surface of the edging tool for each part of the lens trajectory, said velocity being non-constant across said edging tool;
drive means (54) coupled to said holding means to control the axial, radial and rotational movements of said holding means; and
a programmable microprocessor (34) responsive to the stored data relating to said angular, radial and axial positions and velocity to provide control signals to said drive means derived from the stored data, said control signals controlling the axial, radial and rotational movement of said holding means so as to shape the lens workpiece while moving the lens workpiece along said predetermined axis and across said grinding surface;
whereby in use the microprocessor causes the lens workpiece to be held against the grinding surface of the edging tool to follow said lens trajectory, the point of contact between the lens and the grinding surface varying axially along the grinding tool in accordance with said stored data.

2. A lens edging apparatus as claimed in Claim 1 further comprising a sensor (64) for measuring a radial parameter of the shaped lens, said sensor being connected to said microprocessor to supply thereof the value of the measured radial parameter, and said microprocessor being operable to derive an error value from said measured radial parameter value and from a corresponding radial parameter value obtained from the stored data, and further being operable to incorporate said error value into the derivation of said control signals for reducing such error in shaping a subsequent lens workpiece.

3. A lens edging apparatus as claimed in Claim 2 in which said microprocessor is operable to provide control signals which position said predetermined axis at a calculated radial distance from said first axis of said edging tool for each of said succession of angular positions and wherein said error value is incorporated in each calculated distance.

4. A lens edging apparatus as claimed in any preceding claim in which said stored data is in the form of a table of N places each of which contains a plurality of data items including at least one of the following parameters:
a) translational velocity of the lens workpiece along said predetermined axis;
b) rate of angular rotation of the lens workpiece,
c) speed of the edging tool, and
d) force with which the lens workpiece is held against the edging tool.

5. A lens edging apparatus as claimed in Claim 4 in which the rotational speed of the edging tool is a stored parameter and at each place in the table is the highest rotational speed commensurate with the other operating parameters at the same place in the table at which no overheating was observed in a trial and error test of a lens workpiece being shaped, and wherein
said edging tool is connected to said microprocessor which provides speed control signals for said edging too

6. A lens edging apparatus as claimed in Claim 4 in which the rotational speed of the edging tool is a stored parameter and is the highest speed commensurate with the other operating parameters at which no overheating was obser4ved in a trial and error test of a lens workpiece being shaped, and wherein
said edging tool is connected to said microprocessor which provides control signals for said edging tool.

7. A lens edging apparatus as claimed in any preceding claimj further comprising first (27) and second (26) carousels for storing lens blanks to be shaped and shaped lenses respectively, and respective servo-controlled arms (30, 32) for transporting a lens blank from the first carousel to said holding means and a shaped lens from said holding means to the second carousel, each servo-controlled arm being under the control of said microprocessor.

8. A lens edging apparatus as claimed in any preceding claim comprising input means for receiving lens design data and programmable means for converting said lens design data into a set of data for storage in said data storing means for producing a shaped lens in accordance with said lens design data.

9. A lens edging apparatus as claimed in any preceding claim wherein the grinding surface of said edging tool comprises a cylindrical portion (12) and a circular apex portion (14), and said holding means is controllable by said microprocessor to translate the lens workpiece along said cylindrical portion while shaping said lens and then over said apex portion at which the lens edge is bevelled.

10. A lens edging apparatus as claimed in Claim 9 in which said microprocessor establishes a velocity of said lens workpiece along said predetermined axis that is higher when the lens is traversing said cylindrical portion of the edging tool than when it is traversing the apex portion thereof.

11. A lens edging apparatus as claimed in Claims 8 and 9 in which said programmable means is operable to accept the following data in addition to said lens design data: a) the included angle of said apex portion and b) the radius of said cylindrical portion.

12. A method of operating a lens edging apparatus of the kind which has an edging tool (10) rotatable about a first axis and having a grinding surface for grinding a lens workpiece (16), in which method data relating to the shape of the lens to be formed from a lens workpiece are stored in a memory (80) and the lens workpiece is shaped by a combination of rotational movement and radial movement in accordance with stored rotational and radial parameters, the method being **characterized by**:
storing data for establishing a lens trajectory with respect to the grinding surface of the edging tool, said data comprising a succession of lens rotation angles, a corresponding succession of lens radii and a succession of axial positions of the lens workpiece with respect to the grinding surface of the edging tool;
holding the edge of the lens workpiece against the grinding surface of the edging tool to follow said lens trajectory data and thereby shape the lens while continuously translating the lens workpiece across the grinding surface of the edging tool at a controlled velocity;
measuring the radius of the shaped lens at a predetermined lens rotation angle and calculating the error between the measured radius and the lens radius for said predetermined lens rotation angle as stored in data; and in edging a subsequent lens workpiece, adjusting the radial movement of the workpiece while holding it against said edging tool to correct for the calculated error.

13. A method as claimed in Claim 12 wherein the stored lens trajectory dsata provide that the translation of the lens workpiece comprises a first part in which the lens workpiece is translated along a cylindrical portion of the edging tool and a second part in which the lens workpiece is translated along the surface of an apex portion of the edging tool to bevel the edge of the lens.

14. A method as claimed in Claim 13 in which the establishment of said lens trajectory from said stored data incorporates the curvature of the lens workpiece and the included angle of said apex portion.

15. A lens edging apparatus comprising
an edging tool rotatable about a first axis and having a grinding surface (10);
means (52) for holding a lens workpiece (16) which is to be shaped, said holding means being operable to rotate the lens workpiece about a predetermined axis parallel to said first axis to a succession of angular positions and being axially movable to alter the axial position of the lens workpiece relative to the edging tool;
means (60) for storing data relating to the radial position of the lens workpiece relative to the edging tool for each of said succession of angular positions;
**characterised by**:
said holding means (52) being operable to continuously move the lens workpiece along said predetermined axis at a controlled axial velocity and thereby across the grinding surface of said edging tool;
said data storing means (60) being operable to store data relating to the axial position of the lens workpiece with respect to said succession of angular positions in order to establish a lens trajectory with respect to the grinding surface of the edging tool which comprises a succession of lens rotation angles, a corresponding succession of lens radii and a corresponding succession of axial positions with respect to the grinding surface of the edging tool;
drive means (54) coupled to said holding means to control the axial, radial and rotational movements of said holding means; and
a programmable microprocessor (34) responsive to the stored data relating to said angular, radial and axial positions to provide control signals to said drive means derived from the stored data, said control signals controlling the axial, radial and rotational movement of said holding means so as to shape the lens workpiece while moving the lens workpiece along said predetermined axis and across said grinding surface;
whereby in use the microprocessor causes the lens workpiece to be held against the grinding surface of the edging tool to follow said lens trajectory, the point of contact between the lens and the grinding surface varying axially along the grinding tool in accordance with said stored data;
and means for measuring the radius of the shaped lens at a predetermined lens rotation angle and calculating the error between the measured radius and the lens radius for a predetermined lens rotation angle as stored in data; and for adjusting the radial movement in edging a subsequent lens workpiece while holding it against said edging tool to correct for the calculated error.

## Patentansprüche

1. Linsenrandschleifvorrichtung, umfassend:
ein Randschleifwerkzeug, das um eine erste Achse drehbar ist und eine Schleiffläche (10) hat;
ein Mittel (52) zum Halten eines zu gestaltenden Linsenwerkstücks (16), wobei das genannte Haltemittel die Aufgabe hat, das Linsenwerkstück um eine vorbestimmte Achse parallel zur genannten ersten Achse in eine Folge von Winkelpositionen zu drehen, und axial beweglich ist, um die axiale Position des Linsenwerkstücks relativ zum Randschleifwerkzeug zu verändern;
ein Mittel (60) zum Speichern von Daten bezüglich der radialen Position des Linsenwerkstücks relativ zum Randschleifwerkzeug für jede der genannten Folge von Winkelpositionen;
wobei das genannte Haltemittel (52) die Aufgabe hat, das Linsenwerkstück kontinuierlich entlang der genannten vorbestimmten Achse in einer geregelten axialen Geschwindigkeit und somit über die Schleiffläche des genannten Randschleifwerkzeugs zu bewegen;
wobei das genannte Datenspeichermittel (60) die Aufgabe hat, Daten bezüglich der axialen Position des Linsenwerkstücks mit Bezug auf die genannte Folge von Winkelpositionen zu speichern, um eine Linsentrajektorie mit Bezug auf die Schleiffläche des Randschleifwerkzeugs zu errichten, umfassend eine Folge von Linsenrotationswinkeln, eine entsprechende Folge von Linsenradien und eine entsprechende Folge von axialen Positionen mit Bezug auf die Schleiffläche des Randschleifwerkzeugs; wobei das genannte Datenspeichermittel (60) außerdem die Aufgabe hat, Daten zu speichern, die die Geschwindigkeit definieren, mit der die Linse axial über die Fläche des Randschleifwerkzeugs für jeden Teil der Linsentrajektorie translatiert wird, wobei die genannte Geschwindigkeit über das genannte Randschleifwerkzeug nicht konstant ist;
ein Antriebsmittel (54), das mit dem genannten Haltemittel verbunden ist, um die axialen, radialen und rotierenden Bewegungen des genannten Haltemittels zu steuern; und
einen programmierbaren Mikroprozessor (34), der auf die gespeicherten Daten im Zusammenhang mit den genannten winkligen, radialen und axialen Positionen und der Geschwindigkeit anspricht, um Steuersignale zu dem genannten Antriebsmittel zu senden, die von den gespeicherten Daten stammen, wobei die genannten Steuersignale die axiale, radiale und rotierende Bewegung des genannten Haltemittels steuern, um das Linsenwerkstück zu gestalten, während das Linsenwerkstück entlang der genannten vorbestimmten Achse und über die genannte Schleiffläche bewegt wird;
wobei der Mikroprozessor im Gebrauch bewirkt, dass das Linsenwerkstück gegen die Schleiffläche des Randschleifwerkzeugs gehalten wird, um der genannten Linsentrajektorie zu folgen, wobei der Kontaktpunkt zwischen der Linse und der Schleiffläche axial entlang dem Schleifwerkzeug gemäß den genannten gespeicherten Daten variiert.

2. Linsenrandschleifvorrichtung nach Anspruch 1, ferner umfassend einen Sensor (64) zum Messen eines radialen Parameters der gestalteten Linse, wobei der genannte Sensor mit dem genannten Mikroprozessor verbunden ist, um den Wert des gemessenen Radialparameters zu liefern, wobei der genannte Mikroprozessor die Aufgabe hat, einen Fehlerwert von dem genannten gemessenen Radialparameterwert und von einem entsprechenden Radialparameterwert von den gespeicherten Daten abzuleiten, und ferner die Aufgabe hat, den genannten Fehlerwert in die Ableitung der genannten Steuersignale einzubauen, um einen solchen Fehler bei der Gestaltung eines nachfolgenden Linsenwerkstücks zu reduzieren.

3. Linsenrandschleifvorrichtung nach Anspruch 2, wobei der genannte Mikroprozessor die Aufgabe hat, Steuersignale zu erzeugen, die die genannte vorbestimmte Achse in einer berechneten radialen Entfernung von der genannten ersten Achse des genannten Randschleifwerkzeugs für jede der genannten Folge von Winkelpositionen positionieren, wobei der genannte Fehlerwert in jeder berechneten Entfernung eingeschlossen ist.

4. Linsenrandschleifvorrichtung nach einem der vorherigen Ansprüche, wobei die genannten gespeicherten Daten die Form einer Tabelle mit N Orten haben, die jeweils eine Mehrzahl von Datenelementen enthalten, die wenigstens einen der folgenden Parameter einschließen:
a) Translationsgeschwindigkeit des Linsenwerkstücks entlang der genannten vorbestimmten Achse,
b) Rate der Winkelrotation des Linsenwerkstücks,
c) Geschwindigkeit des Randschleifwerkzeugs und
d) die Kraft, mit der das Linsenwerkstück gegen das Randschleifwerkzeug gehalten wird.

5. Linsenrandschleifvorrichtung nach Anspruch 4, wobei die Drehzahl des Randschleifwerkzeugs ein gespeicherter Parameter ist, und wobei an jedem Ort in der Tabelle die höchste Drehzahl in Übereinstimmung mit den anderen Betriebsparametern am gleichen Ort in der Tabelle ist, wo keine Überhitzung in einem Versuch-und-Irrtum-Test eines gestalteten Linsenwerkstücks beobachtet wurde, und wobei
das genannte Randschleifwerkzeug mit dem genannten Mikroprozessor verbunden ist, der auch Geschwindigkeitsregelsignale für das genannte Randschleifen sendet.

6. Linsenrandschleifvorrichtung nach Anspruch 4, wobei die Drehzahl des Randschleifwerkzeugs ein gespeicherter Parameter und die höchste Geschwindigkeit in Übereinstimmung mit den anderen Betriebsparametern ist, wo keine Überhitzung in einem Versuch-und-Irrtum-Test eines gestalteten Linsenwerkstücks beobachtet wurde, und wobei
das genannte Randschleifwerkzeug mit dem genannten Mikroprozessor verbunden ist, der Steuersignale für das genannte Randschleifwerkzeug sendet.

7. Linsenrandschleifvorrichtung nach einem der vorherigen Ansprüche, ferner umfassend ein erstes (27) und ein zweites (26) Karussell zum Aufbewahren von jeweils zu gestaltenden Linsenrohlingen und gestalteten Linsen und jeweilige servogesteuerte Arme (30, 32) zum Transportieren eines Linsenrohlings vom ersten Karussell zu dem genannten Haltemittel und einer gestalteten Linse von dem genannten Haltemittel zum zweiten Karussell, wobei jeder servogesteuerte Arm von dem genannten Mikroprozessor gesteuert wird.

8. Linsenrandschleifvorrichtung nach einem der vorherigen Ansprüche, umfassend ein Eingabemittel für den Empfang von Linsendesigndaten und ein programmierbares Mittel zum Konvertieren der genannten Linsendesigndaten in einen Satz Daten zur Speicherung in dem genannten Datenspeichermittel, um eine gestaltete Linse in Übereinstimmung mit den genannten Linsendesigndaten zu erzeugen.

9. Linsenrandschleifvorrichtung nach einem der vorherigen Ansprüche, wobei die Schleiffläche des genannten Randschleifwerkzeugs einen zylindrischen Abschnitt (12) und einen kreisförmigen Spitzenabschnitt (14) umfasst und das genannte Haltemittel von dem genannten Mikroprozessor steuerbar ist, um das Linsenwerkstück entlang dem genannten zylindrischen Abschnitt zu übertragen, während die genannte Linse gestaltet wird, und dann über den genannten Spitzenabschnitt, an dem der Linsenrand abgeschrägt wird.

10. Linsenrandschleifvorrichtung nach Anspruch 9, wobei der genannte Mikroprozessor eine Geschwindigkeit des genannten Linsenwerkstücks entlang der genannten vorbestimmten Achse ermittelt, die höher ist, wenn die Linse den genannten zylindrischen Abschnitt des Randschleifwerkzeugs überquert, als wenn sie seinen Spitzenabschnitt überquert.

11. Linsenrandschleifvorrichtung nach Anspruch 8 und 9, wobei das genannte programmierbare Mittel dafür vorgesehen ist, die folgenden Daten zusätzlich zu den genannten Linsendesigndaten anzunehmen: a) den Öffnungswinkel des genannten Spitzenabschnitts und b) den Radius des genannten zylindrischen Abschnitts.

12. Verfahren zum Betreiben einer Linsenrandschleifvorrichtung der Art, die ein Randschleifwerkzeug (10) hat, das um eine erste Achse drehbar ist, mit einer Schleiffläche zum Schleifen eines Linsenwerkstücks (16), wobei in dem Verfahren Daten bezüglich der Gestalt der von einem Linsenwerkstück zu formenden Linse in einem Speicher (80) gespeichert werden und das Linsenwerkstück durch eine Kombination aus rotierender Bewegung und radialer Bewegung gemäß den gespeicherten Dreh- und Radialparametern gestaltet wird, wobei das Verfahren durch die folgenden Schritte gekennzeichnet ist:
Speichern von Daten zum Errichten einer Linsentrajektorie mit Bezug auf die Schleiffläche des Randschleifwerkzeugs, wobei die genannten Daten eine Folge von Linsenrotationswinkeln, eine entsprechende Folge von Linsenradien und eine Folge von axialen Positionen des Linsenwerkstücks mit Bezug auf die Schleiffläche des Randschleifwerkzeugs umfassen;
Halten des Randes des Linsenwerkstücks gegen die Schleiffläche des Randschleifwerkzeugs, um den genannten Linsentrajektoriedaten zu folgen und somit die Linse zu gestalten, während das Linsenwerkstück kontinuierlich über die Schleiffläche des Randschleifwerkzeugs in einer geregelten Geschwindigkeit translatiert wird;
Messen des Radius der gestalteten Linse in einem vorbestimmten Linsenrotationswinkel und Berechnen des Fehlers zwischen dem gemessenen Radius und dem Linsenradius für den genannten vorbestimmten Linsenrotationswinkel, der in den Daten gespeichert ist; und beim Randschleifen eines nachfolgenden Linsenwerkstücks Einstellen der radialen Bewegung des Werkstücks, während es gegen das genannte Randschleifwerkzeug gehalten wird, um den berechneten Fehler zu korrigieren.

13. Verfahren nach Anspruch 12, wobei die gespeicherten Linsentrajektoriedaten vorsehen, dass die Translation des Linsenwerkstücks einen ersten Teil, in dem das Linsenwerkstück entlang einem zylindrischen Abschnitt des Randschleifwerkzeugs translatiert wird, und einen zweiten Teil umfasst, in dem das Linsenwerkstück entlang der Fläche eines Spitzenabschnitts des Randschleifwerkzeugs translatiert wird, um den Rand der Linse abzuschrägen.

14. Verfahren nach Anspruch 13, wobei die Errichtung der genannten Linsentrajektorie von den genannten gespeicherten Daten die Krümmung des Linsenwerkstücks und den Öffnungswinkel des genannten Spitzenabschnitts einschließt.

15. Linsenrandschleifvorrichtung, umfassend:
ein Randschleifwerkzeug, das um eine erste Achse drehbar ist und eine Schleiffläche (10) hat;
ein Mittel (52) zum Halten eines zu gestaltenden Linsenwerkstücks (16), wobei das genannte Haltemittel die Aufgabe hat, das Linsenwerkstück um eine vorbestimmte Achse parallel zur genannten ersten Achse in eine Folge von Winkelpositionen zu drehen, und axial beweglich ist, um die axiale Position des Linsenwerkstücks relativ zum Randschleifwerkzeug zu verändern;
ein Mittel (60) zum Speichern von Daten bezüglich der radialen Position des Linsenwerkstücks relativ zum Randschleifwerkzeug für jede der genannten Folge von Winkelpositionen;
**dadurch gekennzeichnet, dass**:
das genannte Haltemittel (52) die Aufgabe hat, das Linsenwerkstück kontinuierlich entlang der genannten vorbestimmten Achse in einer geregelten axialen Geschwindigkeit und somit über die Schleiffläche des genannten Randschleifwerkzeugs zu bewegen;
wobei das genannte Datenspeichermittel (60) die Aufgabe hat, Daten bezüglich der axialen Position des Linsenwerkstücks mit Bezug auf die genannte Folge von Winkelpositionen zu speichern, um eine Linsentrajektorie mit Bezug auf die Schleiffläche des Randschleifwerkzeugs zu errichten, umfassend eine Folge von Linsenrotationswinkeln, eine entsprechende Folge von Linsenradien und eine entsprechende Folge von axialen Positionen mit Bezug auf die Schleiffläche des Randschleifwerkzeugs;
ein Antriebsmittel (54), das mit dem genannten Haltemittel verbunden ist, um die axialen, radialen und rotierenden Bewegungen des genannten Haltemittels zu steuern; und
einen programmierbaren Mikroprozessor (34), der auf die gespeicherten Daten im Zusammenhang mit den genannten winkligen, radialen und axialen Positionen anspricht, um Steuersignale zu dem genannten Antriebsmittel zu senden, die von den gespeicherten Daten stammen, wobei die genannten Steuersignale die axiale, radiale und rotierende Bewegung des genannten Haltemittels steuern, um das Linsenwerkstück zu gestalten, während das Linsenwerkstück entlang der genannten vorbestimmten Achse und über die genannte Schleiffläche bewegt wird;
wobei der Mikroprozessor im Gebrauch bewirkt, dass das Linsenwerkstück gegen die Schleiffläche des Randschleifwerkzeugs gehalten wird, um der genannten Linsentrajektorie zu folgen, wobei der Kontaktpunkt zwischen der Linse und der Schleiffläche axial entlang dem Schleifwerkzeug gemäß den genannten gespeicherten Daten variiert;
und ein Mittel zum Messen des Radius der gestalteten Linse in einem vorbestimmten Linsenrotationswinkel und Berechnen des Fehlers zwischen dem gemessenen Radius und dem Linsenradius für einen vorbestimmten Linsenrotationswinkel, der in den Daten gespeichert ist; und zum Einstellen der radialen Bewegung beim Randschleifen eines nachfolgenden Linsenwerkstücks, während es gegen das genannte Randschleifwerkzeug gehalten wird, um den berechneten Fehler zu korrigieren.

## Revendications

1. Un appareil à meuler les lentilles, comprenant :
un outil à meuler qui peut pivoter autour d'un premier axe et qui a une surface de meulage (10) ;
des moyens (52) pour maintenir une lentille à usiner (16) qui doit être formée, lesdits moyens de maintien pouvant fonctionner pour faire tourner la lentille à usiner autour d'un axe prédéterminé parallèle audit premier axe, jusqu'à une succession de positions angulaires, et qui peuvent être déplacés axialement pour modifier la position axiale de la lentille à usiner relativement à l'outil à meuler ;
des moyens (60) pour mémoriser des données ayant trait à la position radiale de la lentille à usiner relativement à l'outil à meuler pour chacune desdites successions de positions angulaires ;
lesdits moyens de maintien (52) pouvant fonctionner pour déplacer continuellement la lentille à usiner le long dudit axe prédéterminé à une vitesse axiale contrôlée et, ainsi, en travers de la surface de meulage dudit outil à meuler ;
lesdits moyens de mémorisation de données (60) pouvant fonctionner pour mémoriser des données ayant trait à la position axiale de la lentille à usiner relativement à ladite succession de positions angulaires pour établir une trajectoire de la lentille relativement à la surface de meulage de l'outil à meuler qui comprend une succession d'angles de rotation des lentilles, une succession correspondante de rayons de lentilles et une succession correspondante de positions axiales relativement à la surface de meulage de l'outil à meuler ; lesdits moyens de mémorisation de données (60) pouvant également fonctionner pour mémoriser des données qui définissent la vitesse à laquelle la lentille est déplacée axialement en travers de la surface de l'outil à meuler pour chaque partie de la trajectoire de la lentille, ladite vitesse étant non constante en travers dudit outil à meuler ;
des moyens d'entraînement (54) couplés auxdits moyens de maintien pour contrôler les mouvements axiaux, radiaux et de rotation desdits moyens de maintien ; et
un microprocesseur (34) programmable qui réagit aux données mémorisées auxdites positions angulaires, radiales et axiales et à la vitesse, pour fournir des signaux de commande auxdits moyens d'entraînement, signaux dérivés des données mémorisées, lesdits signaux de commande commandant le mouvement axial, radial et de rotation desdits moyens de maintien de sorte à former la lentille à usiner tout en déplaçant la lentille à usiner le long dudit axe prédéterminé et en travers de ladite surface de meulage ;
de sorte que, à l'emploi, le microprocesseur fait maintenir la lentille à usiner contre la surface de meulage dudit outil à meuler pour suivre ladite trajectoire de la lentille, le point de contact entre la lentille et la surface de meulage variant axialement le long de l'outil à meuler conformément auxdites données mémorisées.

2. Un appareil à meuler les lentilles selon la Revendication 1, qui comprend de plus un capteur (64) pour mesurer un paramètre radial de la lentille formée, ledit capteur étant connecté audit microprocesseur qui lui communique la valeur du paramètre radial mesuré, et ledit microprocesseur pouvant fonctionner pour dériver une valeur d'erreur à partir de ladite valeur paramétrale radiale mesurée et, à partir d'une valeur paramétrale radiale correspondante obtenue à partir des données mémorisées, et qui de plus peut fonctionner pour incorporer ladite valeur d'erreur dans la dérivation desdits signaux de commande pour réduire cette erreur pendant la formation d'une lentille à usiner ultérieurement.

3. Un appareil à meuler les lentilles selon la Revendication 2, dans lequel ledit microprocesseur peut fonctionner pour fournir des signaux de commande qui positionnent ledit axe prédéterminé à une distance radiale calculée à partir dudit premier axe dudit outil à meuler pour chacune desdites successions de positions angulaires et dans lequel ladite valeur d'erreur est incorporée dans chaque distance calculée.

4. Un appareil à meuler les lentilles selon l'une quelconque des revendications précédentes, dans lequel lesdites données mémorisées revêtent la forme de tables de N places dont chacune contient une pluralité d'articles de données qui incluent au moins l'un des paramètres suivants :
a) vitesse de translation de la lentille à usiner le long dudit axe prédéterminé,
b) taux de rotation angulaire de la lentille à usiner,
c) vitesse de l'outil à meuler, et
d) force avec laquelle la lentille à usiner est maintenue contre l'outil à meuler.

5. Un appareil à meuler les lentilles selon la Revendication 4, dans lequel la vitesse de rotation de l'outil à meuler est un paramètre mémorisé qui, à chaque endroit dans la table, est la vitesse de rotation la plus élevée en accord avec les autres paramètres d'exploitation au même endroit dans la table, auquel aucun échauffement excessif n'a été observé pendant un essai par tâtonnements de formation d'une lentille à usiner, et dans lequel
ledit outil à meuler est connecté audit microprocesseur qui fournit des signaux de commande de vitesse pour ledit outil à meuler.

6. Un appareil à meuler les lentilles selon la Revendication 4, dans lequel la vitesse de rotation de l'outil à meuler est un paramètre mémorisé et est la vitesse la plus élevée en accord avec les autres paramètres d'exploitation, à laquelle aucun échauffement excessif n'a été observé dans un essai par tâtonnements de formation d'une lentille à usiner, et dans lequel
ledit outil à meuler est connecté audit microprocesseur qui fournit des signaux de commande pour ledit outil à meuler.

7. Un appareil à meuler les lentilles selon l'une quelconque des revendications précédentes, qui comprend de plus un premier (27) et un deuxième (26) plateaux tournants pour stocker respectivement des ébauches de lentilles à former et des lentilles formées, et des bras respectifs servocommandés (30, 32) pour transporter une ébauche de lentille depuis le premier plateau tournant jusqu'auxdits moyens de maintien et une lentille formé depuis lesdits moyens de maintien jusqu'au deuxième plateau tournant, chaque bras servocommandé étant sous la commande dudit microprocesseur.

8. Un appareil à meuler les lentilles selon l'une quelconque des revendications précédentes, comprenant des moyens de saisie pour recevoir des données de conception de lentilles et des moyens programmables pour convertir lesdites données de construction de lentilles en un jeu de données à mémoriser dans lesdits moyens de mémorisation de données pour produire une lentille formée selon lesdites données de conception de lentilles.

9. Un appareil à meuler les lentilles selon l'une quelconque des revendications précédentes, dans lequel la surface de meulage dudit outil à meuler comprend une partie cylindrique (12) et une partie à sommet circulaire (14), et lesdits moyens de maintien peuvent être commandés par ledit microprocesseur pour faire déplacer la lentille à usiner le long de ladite partie cylindrique tout en formant ladite lentille puis au-dessus de ladite partie de sommet à laquelle le bord de la lentille est chanfreiné.

10. Un appareil à meuler les lentilles selon la Revendication 9, dans lequel ledit microprocesseur établit une vitesse de ladite lentille à usiner le long dudit axe prédéterminé, qui est plus élevée lorsque la lentille traverse ladite partie cylindrique de l'outil à meuler que lorsqu'il traverse la partie de sommet de celui-ci.

11. Un appareil à meuler les lentilles selon les Revendications 8 et 9, dans lequel lesdits moyens programmables peuvent fonctionner pour accepter les données suivantes en plus desdites données de conception de lentilles : a) l'angle inclus de ladite partie de sommet et b) le rayon de ladite partie cylindrique.

12. Un procédé d'exploitation d'un appareil à meuler les lentilles du type qui est pourvu d'un outil à meuler (10) qui peut pivoter autour d'un premier axe et ayant une surface de meulage pour meuler une lentille à usiner (16), selon lequel les données ayant trait à la forme de la lentille à former depuis une lentille à usiner sont stockées dans une mémoire (80) et la lentille à usiner est formé par une combinaison d'un mouvement de rotation et d'un mouvement radial conformément aux paramètres mémorisés de rotation et de déplacement radial, le procédé étant **caractérisé** comme suit :
mémorisation de données pour établir une trajectoire des lentilles relativement à la surface de meulage de l'outil à meuler, lesdites données comprenant une succession d'angles de rotation des lentilles, une succession correspondante de rayons des lentilles et une succession de positions axiales de la lentille à usiner relativement à la surface de meulage de l'outil à meuler ;
maintien du bord des lentilles à usiner contre la surface de meulage de l'outil à meuler pour suivre lesdites données de trajectoire de la lentille et former ainsi la lentille tout en assurant un mouvement de translation continue de la lentille à usiner en travers de la surface de meulage de l'outil à meuler à une vitesse contrôlée ;
mesure du rayon de la lentille formée à un angle de rotation prédéterminé de la lentille et calcul de l'erreur entre le rayon mesuré et le rayon de la lentille pour ledit angle de rotation prédéterminé de la lentille mémorisé dans les données ; et meulage d'une lentille à usiner ultérieurement, ajustement du mouvement radial de la lentille à usiner tout en la maintenant contre ledit outil à meuler pour compenser l'erreur calculée.

13. Un procédé selon la Revendication 12, selon lequel les données de trajectoire mémorisées pour les lentilles assurent que la translation de la lentille à usiner comprend une première partie pendant laquelle la lentille à usiner est mûe le long d'une partie cylindrique de l'outil à meuler et une deuxième partie dans laquelle la lentille à usiner est mûe le long de la surface d'une partie de sommet de l'outil à meuler pour chanfreiner le bord de la lentille.

14. Un procédé selon la Revendication 13, dans lequel l'établissement de ladite trajectoire de lentille à partir desdites données mémorisées incorpore la courbure de la lentille à usiner et l'angle inclus de ladite partie de sommet.

15. Un appareil à meuler les lentilles comprenant :
un outil à meuler qui peut pivoter autour d'un premier axe et qui a une surface de meulage (10) ;
des moyens (52) pour maintenir une lentille à usiner (16) qui doit être formée, lesdits moyens de maintien pouvant fonctionner pour faire tourner la lentille à usiner autour d'un axe prédéterminé parallèle audit premier axe, jusqu'à une succession de positions angulaires, et qui peuvent être déplacés axialement pour modifier la position axiale de la lentille à usiner relativement à l'outil à meuler ;
des moyens (60) pour mémoriser des données ayant trait à la position radiale de la lentille à usiner relativement à l'outil à meuler pour chacune desdites successions de positions angulaires ;
characterisé par:
lesdits moyens de maintien (52) pouvant fonctionner pour déplacer continuellement la lentille à usiner le long dudit axe prédéterminé à une vitesse axiale contrôlée et, ainsi, en travers de la surface de meulage dudit outil à meuler ;
lesdits moyens de mémorisation de données (60) pouvant fonctionner pour mémoriser des données ayant trait à la position axiale de la lentille à usiner relativement à ladite succession de positions angulaires pour établir une trajectoire de la lentille relativement à la surface de meulage de l'outil à meuler qui comprend une succession d'angles de rotation de lentilles, une succession correspondante de rayons de lentilles et une succession correspondante de positions axiales relativement à la surface de meulage de l'outil à meuler ;
des moyens d'entraînement (54) couplés auxdits moyens de maintien pour contrôler les mouvements axiaux, radiaux et de rotation desdits moyens de maintien ; et
un microprocesseur (34) programmable qui réagit aux données mémorisées auxdites positions angulaires, radiales et axiales, pour fournir des signaux de commande auxdits moyens d'entraînement, signaux dérivés des données mémorisées, lesdits signaux de commande commandant le mouvement axial, radial et de rotation desdits moyens de maintien de sorte à former la lentille à usiner tout en déplaçant la lentille à usiner le long dudit axe prédéterminé et en travers de ladite surface de meulage ;
de sorte que, à l'emploi, le microprocesseur fait maintenir la lentille à usiner contre la surface de meulage dudit outil à meuler pour suivre ladite trajectoire de la lentille, le point de contact entre la lentille et la surface de meulage variant axialement le long de l'outil à meuler conformément auxdites données mémorisées ;
et des moyens pour mesurer le rayon de la lentille formée à un angle de rotation prédéterminé de la lentille et de calcul de l'erreur entre le rayon mesuré et le rayon de la lentille pour un angle de rotation prédéterminé de la lentille mémorisé dans les données ; et pour ajuster le mouvement radial en meulant une lentille à usiner ultérieurement tout en la maintenant contre ledit outil à meuler pour compenser l'erreur calculée.
